# EUROPEAN PATENT SPECIFICATION

(11) **EP 2 860 951 B1**
(45) Date of publication and mention of the grant of the patent: **04.09.2019**
(21) Application number: 14168632.9
(22) Date of filing: 16.05.2014
(51) Int. Cl.: H04M 1/725, H04W 4/16

(54) **Communication service operating method and electronic device supporting the same**
Kommunikationsdienstbetriebsverfahren und elektronische Vorrichtung damit
Procédé de fonctionnement de service de communication et dispositif électronique le supportant

(30) Priority: 11.10.2013 KR 20130121202
(43) Date of publication of application: 15.04.2015
(73) Proprietor: Samsung Electronics Co., Ltd., Gyeonggi-do 443-742 (KR)
(72) Inventor: Kim, Hyon-Woo, 443-742 Gyeonggi-do (KR); Lee, Heon-Yong, 443-742 Gyeonggi-do (KR); Cha, Jung-Yoon, 443-742 Gyeonggi-do (KR)
(74) Representative: Nederlandsch Octrooibureau

(56) References cited:
- WO-A2-2005/008938
- US-A1- 2005 186 906
- US-A1- 2007 287 498
- US-A1- 2008 246 835
- US-A1- 2008 259 829
- US-B1- 8 543 169

## Description

### CROSS-REFERENCE TO RELATED APPLICATION(S) AND CLAIM OF PRIORITY

This application claims priority to Korean patent application No. 10-2013-0121202, filed on October 11, 2013.

### TECHNICAL FIELD

The present disclosure relates to a method and device for operating a communication service.

### BACKGROUND

With recent developments in digital technology, electronic devices available for communication and personal data processing on the move such as mobile communication terminals, personal digital assistants (PDAs), electronic organizers, smart phones, and tablet personal computers (PCs), are being released with diversity. Such electronic devices do not remain confined to their traditional given areas, but are attaining a mobile convergence stage in which they encompass the areas of other terminals.

Typically, an electronic device may include a call function such as voice calling and video calling, a message transmission function such as short message service (SMS)/multimedia message service (MMS) and e-mail, an electronic organizer function, a recording function, a TV playback function, a video playback function, a music playback function, an Internet function, a messenger function, and a social networking service (SNS) function.

Furthermore, an electronic device provides a function for linking to an accessory device.

Since a typical electronic device requires a cable for connecting to an accessory device, when an accessory device is located more than a predetermined distance away from an electronic device, the accessory device and electronic device may not operate properly.
US 2008 / 246 835 A1 discloses mobile phone which can discover a PC for setting up a video call through the mobile phone, displaying the video on the PC.
WO 2005 / 008 938 A2 discusses a wireless (Wifi) network including repeater Access Points.
US 8 543 169 B1 relates to a system and method for displaying mobile caller identification for an incoming call on a mobile device on one or more display devices based on a location of the mobile device.
US 2005 / 186 906 A1 discloses a method for Bluetooth-assisted communication in a wireless local area network. Further prior art is represented by documents US 2008/0259829 A1 and US 2007/0287498 A1.

### SUMMARY

It is an objective to address at least one of the above-discussed deficiencies. Various embodiments of the invention are related to providing a method and device for operating a communication service to support the proper interactive operation of a main electronic device and an auxiliary electronic device in a given situation.

According to an aspect of the present disclosure, a main electronic device according to claim 1 is provided.

According to another aspect of the present disclosure, an auxiliary electronic device according to claim 5 is provided.

According to another aspect of the present disclosure, a communication service operating method according to claim 10 is provided.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
Fig. 1 is a view illustrating a communication service operating system according to an embodiment of the present disclosure;
Fig. 2 is a view illustrating a configuration of a main electronic device according to an embodiment of the present disclosure;
Fig. 3 is a view illustrating a configuration of a main control unit according to an embodiment of the present disclosure;
Fig. 4 is a view illustrating a configuration of an auxiliary electronic device according to an embodiment of the present disclosure;
Fig. 5 is a view illustrating a configuration of an auxiliary control unit according to an embodiment of the present disclosure;
Fig. 6 is a view illustrating a configuration of a service supporting device according to an embodiment of the present disclosure;
Fig. 7 is a view illustrating a communication service operating method relating to communication service setting according to an embodiment of the present disclosure;
Fig. 8 is a flowchart illustrating an auxiliary electronic device operating method relating to communication service setting according to an embodiment of the present disclosure;
Fig. 9 is a view illustrating a communication service operating method relating to communication service delivery according to an embodiment of the present disclosure;
Fig. 10 is a flowchart illustrating a main electronic device operating method relating to communication service delivery according to an embodiment of the present disclosure;
Fig. 11 is a flowchart illustrating an auxiliary electronic device operating method relating to communication service delivery according to an embodiment of the present disclosure;
Fig. 12 is a view illustrating a communication service operating method relating to communication service requesting according to an embodiment of the present disclosure;
Fig. 13 is a flowchart illustrating a main electronic device operating method relating to communication service requesting according to an embodiment of the present disclosure;
Fig. 14 is a flowchart illustrating an auxiliary electronic device operating method relating to communication service requesting according to an embodiment of the present disclosure; and
Fig. 15 is a view illustrating a screen interface applicable to communication service operation according to an embodiment of the present disclosure.

### DETAILED DESCRIPTION

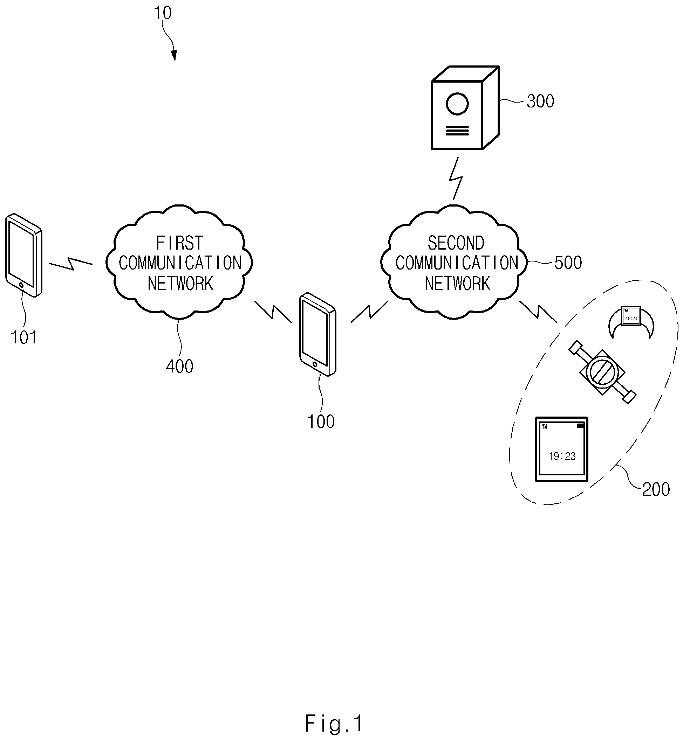

FIGURES 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications system. Hereinafter, embodiments of the present disclosure will be described in more detail with reference to the accompanying drawings. At this point, it should be understood that like reference numerals refer to like elements in the accompanying drawings. Moreover, detailed descriptions related to well-known functions or configurations will be ruled out in order not to unnecessarily obscure subject matters of the present disclosure. That is, in the following description, only necessary parts to understand operations according to an embodiment of the present disclosure are described, and descriptions of other parts are not provided so as not to obscure subject matters of the present disclosure.

A main electronic device of the present disclosure in the following description may include all information communication devices, multimedia devices, and devices using an application processor (AP), a graphic processing unit (GPU), and a central processing unit (CPU) together with application devices thereof. For example, the main electronic device may include devices such as tablet personal computers (PCs), smart phones, digital cameras, portable multimedia players (PMPs), media players, portable game consoles, and personal digital assistants (PDAs) in addition to mobile communication terminals that operate based on communication protocols corresponding to various communication systems.

An auxiliary electronic device described in various embodiments of the present disclosure may be at least one of different forms of various wearable electronic devices capable of communicating with a main electronic device, such as electronic watches, electronic bracelets, electronic ankle bracelets, electronic necklaces, electronic earrings, electronic rings, and electronic belts. According to another embodiment, an auxiliary electronic device may be at least part of a suit or a pair of pants. The above-mentioned auxiliary electronic device is not limited to a specific form or arranged position. Moreover, according to another embodiment of the present disclosure, an auxiliary electronic device applied to a variety of embodiments may be a portable terminal and a smart phone similar to a main electronic device. Accordingly, an auxiliary electronic device described below is not limited to a wearable electronic device or a specific form of an electronic device and may be understood as being embodied in a form including a network communication module capable of communicating with a main electronic device by connecting to a secondary communication network. According to an embodiment, an auxiliary electronic device may further include at least one of various components that may be included in a main electronic device, for example.

Hereinafter, a communication service operating system according to an embodiment of the present disclosure, each configuration in a corresponding system, a system operating method, and an operating method of each configuration will be described with reference to the accompanying drawings. A system and device and an operating method according to an embodiment of the present disclosure are not limited to the content described below, and may thus be applied to various embodiments on the basis of embodiments below.

Fig. 1 is a view illustrating a communication service operating system according to an embodiment of the present disclosure.

Referring to Fig. 1, the communication service operating system 10 includes a main electronic device 100, an auxiliary electronic device 200, a service supporting device 300, a first communication network 400, and a second communication network 500. Here, the first communication network 400 of the communication service operating system 10 may support a communication service between the main electronic device 100 and another electrode device 101.

The communication service operating system 10 may establish a communication channel through the second communication network 500 available for telecommunications between the main electronic device 100 and the auxiliary electronic device 200. According to an embodiment, the main electronic device 100 of the communication service operating system 10 may deliver communication service data with the other electronic device 101 through the first communication network 400, such as voice call service data, video call service data, message service data, and messenger service data, to the auxiliary electronic device 200 through the second communication network 500. According to various embodiments, the auxiliary electronic device 200 of the communication service operating system 10 may receive a communication service related message from the main electronic device 100. Moreover, according to various embodiments, the auxiliary electronic device 200 may request communication service connection from the other electronic device 101 through the main electronic device 100. As mentioned above, the communication service operating system 10 may support the communication service of the main electronic device 100 through the auxiliary electronic device 200 regardless of the distance between the main electronic device 100 and the auxiliary electronic device 200 or the relative positions thereof.

In the communication service operating system 10, the main electronic device 100 and the auxiliary electronic device 200 may support one of a direct mode and an indirect mode in correspondence to a method of transmitting/receiving data.

The direct mode may be a mode establishing a short range communication channel on the basis of short range communication modules equipped in the main electronic device 100 and the auxiliary electronic device 200, and transmitting/receiving data on the basis of the short range communication channel. For example, the direct mode may be a mode in which the main electronic device 100 receives audio data received from the other electronic device 101 and then transmits the received audio data to the auxiliary electronic device 200 through a short range communication channel in a voice call mode. Additionally, the direct mode may be a mode in which the main electronic device 100 receives audio data collected by the auxiliary electronic device 200 through a short range communication channel and then transmits the received audio data to the other electronic device 101.

The indirect mode may be a mode transmitting/receiving service data via a communication channel established based on the second communication network 500 through network communication modules equipped in the main electronic device 100 and the auxiliary electronic device 200. For example, the indirect mode may be a mode in which the main electronic device 100 receives audio data transmitted from the other electronic device 101 and then transmits the received audio data to the auxiliary electronic device 200 through the second communication network 500 in a voice call mode. Moreover, the indirect mode may be a mode in which the main electronic device 100 transmits audio data, transmitted by the auxiliary electronic device 200 through the second communication network 500 to the other electronic device 101, through the first communication network 400 in a voice call mode.

In the direct mode and the indirect mode, data to be transmitted and received may be changed according to the communication service. For example, once a video call mode is executed in one of the direct mode and the indirect mode, at least one of image data and audio data may be transmitted/received between the other electronic device 101, the main electronic device 100, and the auxiliary electronic device 200.

The main electronic device 100 may operate a communication service through the first communication network 400. For example, the main electronic device 100 may establish a communication channel with the other electronic device 101 through the first communication network 400. The main electronic device 100 may operate the communication service with the auxiliary electronic device 200 through the second communication network 500. In this process, the main electronic device 100 may convert communication service data delivered through the first communication network 400 into data of a format applicable to the second communication network 500 and then may deliver the converted data to the auxiliary electronic device 200. The main electronic device 100 may receive a communication service connection request message from the auxiliary electronic device 200 through the second communication network 500. The main electronic device 100 may attempt to connect to the other electronic device 101 corresponding to a corresponding message through the first communication network 400. Once a connection is established, the main electronic device 100 may serve as a communication service relay between the other electronic device 101 and the auxiliary electronic device 200.

The auxiliary electronic device 200 may be a device available for communication with the main electronic device 100 through the second communication network 500. The auxiliary electronic device 200 may be a device similar to the main electronic device 100, for example. According to an embodiment, the auxiliary electronic device 200 may be manufactured in a wearable form. For example, as mentioned above, the auxiliary electronic device 200 may be prepared in a ring form so that it may be worn on a user's finger. According to an embodiment, the auxiliary electronic device 200 may be manufactured in a bracelet or watch form, so that it may be worn on a user's wrist. Herein, various embodiments of the present disclosure are not limited to the above description. For example, the auxiliary electronic device 200 may be manufactured in various forms such as one enabling grasping or carrying. Hereinafter, a wearable electronic device is exemplarily described as the auxiliary electronic device 200. However, as mentioned above, various embodiments of the present disclosure are not limited in terms of the form, appearance, or specific function of the auxiliary electronic device 200.

The auxiliary electronic device 200 may include a power source such as a battery. The auxiliary electronic device 200 may support initialization and communication service operations on the basis of the power. To support a communication service operation, the auxiliary electronic device 200 may support a direct mode and an indirect mode. To support the direct mode, the auxiliary electronic device 200 may connect to the main electronic device 100 on the basis of a short range communication channel or a wired communication channel without using the second communication network 500. To support the indirect mode, the auxiliary electronic device 200 may connect to the main electronic device 100 through the second communication network 500.

The auxiliary electronic device 200 may include various components relating to the use of a communication service. For example, the auxiliary electronic device 200 may output audio after audio processing or display an image on a display unit after image processing in response to a type of communication service data delivered by the main electronic device 100. Furthermore, the auxiliary electronic device 200 may include a vibration module. On receiving a communication service connection from the main electronic device 100, the auxiliary electronic device 200 may output a vibration notification corresponding to a setting in addition to an audio notification and a lamp notification in correspondence to the received communication service connection.

The auxiliary electronic device 200 may perform the direct mode in response to a short range communication channel establishment request from the main electronic device 100. The auxiliary electronic device 200 may establish a short range communication channel with the main electronic device 100 in response to a user input, and on this based, may perform the direct mode.

The auxiliary electronic device 200 may perform the indirect mode in response to a user input. In the process of the indirect mode, the auxiliary electronic device 200 confirms whether the second communication network 500 is accessible. When the second communication network 500 is accessible, the auxiliary electronic device 200 may perform a procedure for executing the indirect mode. According to an embodiment, when the second communication network 500 is inaccessible at the time of an indirect mode execution request, the auxiliary electronic device 200 may perform signal processing relating to the access of the second communication network 500 at regular intervals or in real time. For example, the auxiliary electronic device 200 may perform a wireless access point search relating to the access of the second communication network 500 at regular intervals or in real time. When the second communication network 500 is accessible, the auxiliary electronic device 200 may perform an indirect mode procedure described below. According to another embodiment, on receiving an indirect mode execution request during the accessing of the second communication network 500, the auxiliary electronic device 200 may perform a procedure relating to an indirect mode execution.

The service supporting device 300 may connect to the second communication network 500. The service supporting device 300 may support a communication service operation of the auxiliary electronic device 200 connecting to the second communication network 500. The service supporting device 300 may collect access information on the main electronic device 100 and the auxiliary electronic device 200 through the second communication network 500. According to an embodiment, the service supporting device 300 may request an indirect mode setting from the main electronic device 100 in response to a request of the auxiliary electronic device 200. The service supporting device 300 may provide access information on the second communication network 500 of the auxiliary electronic device 200 in response to a request of the main electronic device 100 having a set indirect mode. According to another embodiment, the service supporting device 300 may deliver a communication service connection request message from the auxiliary electronic device 200 to the main electronic device 100.

According to various embodiments, the service supporting device 300 may support communication service data relay between the main electronic device 100 and the auxiliary electronic device 200. For example, the service supporting device 300 may receive communication service data from the main electronic device 100 and then deliver the received communication service data to the auxiliary electronic device 200. According to an embodiment, the service supporting device 300 may deliver communication service data of one main electronic device 100 to a plurality of auxiliary electronic devices. Moreover, the service supporting device 300 may deliver communication service data provided from a plurality of auxiliary electronic devices to one main electronic device 100.

According to various embodiments, the service supporting device 300 may support communication service data relay between a plurality of main electronic devices and the auxiliary electronic device 200. For example, the service supporting device 300 may receive communication service data from a plurality of main electronic devices and then deliver the received communication service data to one auxiliary electronic device 200 in correspondence to presetting.

The first communication network 400 may support a communication service function of the main electronic device 100. For example, the first communication network 400 may include a base station for supporting a mobile communication function, a base station controller, and a switching center. The first communication network 400 may support at least one method from among various generation communication methods such as 2G, 3G, 4G, and 5G. According to an embodiment, upon receiving a voice call service connection message from the other electronic device 101, the first communication network 400 may deliver the received message to the main electronic device 100. Upon receiving voice call connection permission of the main electronic device 100, the first communication network 400 may establish a voice call channel between the other electronic device 101 and the main electronic device 100. According to another embodiment, upon receiving a video call service connection message from the other electronic device 101, the first communication network 400 may deliver the received message to the main electronic device 100. Upon receiving video call connection permission of the main electronic device 100, the first communication network 400 may support a consultation about bandwidth. The first communication network 400 may establish a video call channel between the other electronic device 101 and the main electronic device 100. According to another embodiment, the first communication network 400 may support a message service of the main electronic device 100. For example, the first communication network 400 may deliver a text, voice, or video message transmitted from the other electronic device 101 to the main electronic device 100. Furthermore, the first communication network 400 may transmit a message delivered by the main electronic device 100 to the other electronic device 101.

The second communication network 500 may be a network supporting a communication method that is different from that of the first communication network 400. For example, the second communication network 500 may be an internet network. According to an embodiment, the second communication network 500 may support an internet protocol (IP) address-based communication. According to various embodiments, the second communication network 500 may include a network device supporting a Wi-Fi communication method such as a wireless access point, a controller controlling the wireless access point, and a core network connected to the controller. The second communication network 500 may store access information on the main electronic device 100 and access information on the auxiliary electronic device 200. The second communication network 500 may update previously stored access information in response to a movement of the main electronic device 100 and the auxiliary electronic device 200. For example, the access information may include IP address information. The second communication network 500 may establish a communication channel between the main electronic device 100 and the service supporting device 300, a communication channel between the service supporting device 300 and the auxiliary electronic device 200, and a communication channel between the main electronic device 100 and the auxiliary electronic device 200. The second communication network 500 may deliver communication service data of the main electronic device 100 to the auxiliary electronic device 200 and also deliver at least some of text, audio, and video data of the auxiliary electronic device 200 to the main electronic device.

The other electronic device 101 may use a communication service together with the main electronic device 100 through the first communication network 400. The other electronic device 101 may include a communication module accessible to the first communication network 400. For example, the other electronic device 101 may be a mobile communication terminal. The other electronic device 101 may transmit a communication service connection message to the main electronic device 100 through the first communication network 400. The other electronic device 101 may establish a communication channel with the main electronic device 100 in correspondence to the permission of the main electronic device 100. Moreover, the other electronic device 101 may receive a communication service connection message transmitted from the main electronic device 100 through the first communication network 400. The other electronic device 101 may transmit to the first communication network 400 a communication service connection permission message according to a user control and then establish a communication channel with the main electronic device 100.

Moreover, according to various embodiments, each of the main electronic device 100 and the auxiliary electronic device 200 may install applications or programs for indirect mode execution described in various embodiments of the present disclosure. The main electronic device 100 and the auxiliary electronic device 200 may confirm mutual address information in correspondence to program execution during indirect mode execution and then establish a communication channel based on the second communication network 500. In this process, the main electronic device 100 and the auxiliary electronic device 200 may use fixed address information. According to an embodiment, the main electronic device 100 and the auxiliary electronic device 200 may establish a communication channel based on the second communication network 500 by mutually updating dynamic address information. According to various embodiments, the main electronic device 100 and the auxiliary electronic device 200 may perform an authentication process based on the service supporting device 300 in relation to security.

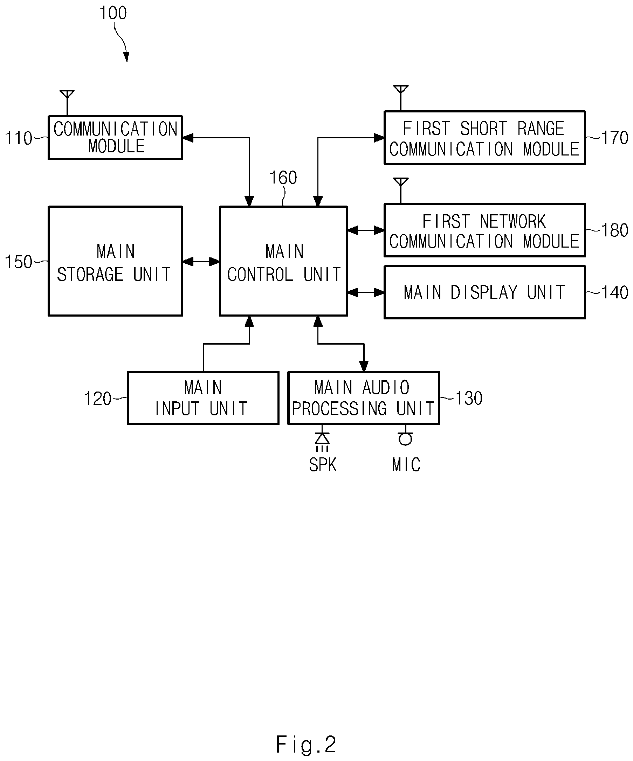

Fig. 2 is a view illustrating a configuration of a main electronic device 100 according to an embodiment of the present disclosure.

Referring to Fig. 2, the main electronic device 100 includes a communication module 110, a main input unit 120, a main audio processing unit 130, a main display unit 140, a main storage unit 150, a main control unit 160, a first short range communication module 170, and a first network communication module 180. Moreover, the main electronic device 100 may further include a camera module supporting video call service.

The main electronic device 100 having such a configuration may establish a communication channel with the first communication network 400 based on the communication module 110. The main electronic device 100 may establish a communication channel with the second communication network 500 based on the first network communication module 180. The main electronic device 100 may deliver communication service data of the other electronic device 101 connected to the first communication network 400 to the auxiliary electronic device 200 through the second communication network 500. Additionally, the main electronic device 100 may receive at least one form of data such as text data, audio data, and image data, transmitted from the auxiliary electronic device 200 connected to the second communication network 500. The main electronic device 100 may transmit the received data to the other electronic device 101 through the first communication network 400. Alternatively, the main electronic device 100 may be directly connected to the auxiliary electronic device 200 on the basis of the first short range communication module 170 in support of a direct mode. Herein, when the main electrode device 100 is not designed to support a direct connection with the auxiliary electronic device 200, the first short range communication module 170 may be excluded from the main electronic device 100. In this case, the main electronic device 100 may not support a direct mode but may support an indirect mode by default during communication with the auxiliary electronic device 200.

The communication module 110 may establish a communication channel with the first communication network 400. The communication module 110 may be a module communicating with the first communication network 400, for example, a mobile communication module. Additionally, the communication module 110 may be a communication module using a Public Switched Telephone Network (PSTN) in correspondence to characteristics of the first communication network 400. The communication module 110 may maintain a camping state by accessing a base station. The communication module 110 may support communication channel establishment with the other electronic device 101 through a base station and data transmission based on the formed communication channel. The communication module 110 may support the transmission of at least one of text data, audio data, and video data. Upon receiving a communication service connection message from the other electronic device 101, the communication module 110 may establish a communication channel with the other electronic device 101 in response to a control of the main control unit 160.

The main input unit 120 may generate an input signal of the main electronic device 100. The main input unit 120 may include at least one of a key pad, a dome switch, a touch pad (such as static pressure/electrostatic), a jog wheel, and a jog switch. The main input unit 120 may be implemented in a button form on the outside of the main electronic device 100, and some buttons may be implemented as a touch panel.

According to an embodiment, the main input unit 120 may include a plurality of keys for receiving number or text information and setting various functions. Such keys may include a menu return key, a screen on/off key, a power on/off key, and a volume control key. The main input unit 120 generates a key event relating to a user setting and a function control of the main electronic device 100 and then delivers the generated key event to the main control unit 160. The key event may include a power on/off event, a volume control event, and a screen on/off event. Alternatively, a physical key of the main input unit 120 is called a hard key, and a virtual key displayed on the main display unit 140 is called a soft key.

The main audio processing unit 130 may process an audio signal of the main electronic device 100. For example, the main audio processing unit 130 may transmit an audio signal inputted from the main control unit 160 to a speaker. The main audio processing unit 130 converts voice/audio data into audible sounds and outputs it through a speaker in response to a control of the main control unit 160. The main audio processing unit 130 may perform a function for delivering an audio signal such as voice inputted from a microphone to the main control unit 160. The main audio processing unit 130 may convert an audio signal such as voice inputted from a microphone into a digital signal and then deliver the digital signal to the main control unit 160.

The speaker may output audio data received from the communication module 110 or stored in the main storage unit 150, in a call mode, a sound recording (or video recording) mode, a media content playback mode, a broadcast receiving mode, and a capturing mode. The speaker may output a sound signal relating to a function performed in the main electronic device 100 (such as, call connection reception, call connection transmission, music file playback, video file playback, capturing, external output, or the like). According to an embodiment, the speaker may be put in a muted state during a communication service supporting process through the auxiliary electronic device 200. For example, a sound signal transmitted from the other electronic device 101 is not outputted through a speaker and may be transmitted to the auxiliary electronic device 200 in response to a control of the main control unit 160.

According to various embodiments, a speaker may output an audio signal corresponding to a change of an indirect mode setting state and a direct mode setting state. For example, as the indirect setting is performed, the speaker may output an audio signal corresponding to the indirect mode setting state. Moreover, the speaker may output audio data corresponding to the case that an indirect mode is released, audio data corresponding to the case that an indirect mode changes into a direct mode, audio data corresponding to the case that a direct mode is set, audio data corresponding to the case that a direct mode is released, and audio data corresponding to the case that a direct mode changes into an indirect mode.

A mike receives an external sound signal in a sound recording (or video recording) mode, a voice recognition mode, and a capturing mode and then processes the received external sound as electrical sound data. In the case of a call mode, the processed voice data may be converted into a format transmittable to a mobile communication base station and then outputted through the communication module 110. Then, the mike may have various noise reduction algorithms to reduce noise occurring while an external sound signal is inputted. The mike may be deactivated during a direct mode setting state and an indirect mode setting state.

The main display unit 140 displays (outputs) information processed in the main electronic device 100. For example, when the main electronic device 100 is in a call mode, it displays a call related user interface (UI) or graphic user interface (GUI). Additionally, when the main electronic device 100 is in a video call mode or a capturing mode, the main display unit 140 displays a captured and/or received image, UI, or GUI. The main display unit 140 displays an execution screen on various functions (or applications) executed in the main electronic device 100. Then, the main display unit 140 activates a virtual input device (such as a virtual touchpad) in response to a control of the main control unit 160 and displays the activated virtual input device on the execution screen, and then delivers a signal inputted through the virtual input device into the main control unit 160.

According to an embodiment, the main display unit 140 may output an icon, an indicator, and a UI for guiding direct mode setting and cancellation through the first short range communication module 170. Additionally, the main display unit 140 may output an icon, an indicator, and a UI for guiding indirect mode setting and cancellation through the first network communication module 180. Or, depending on the setting, the main display unit 140 may have a turn-off state during direct mode setting and cancellation and indirect mode setting and cancellation.

The main display unit 140 may support a screen display in a landscape mode or a screen display in a portrait mode according to a rotation direction (or a positioned direction) of the main electronic device 100 and a screen switching display according to a change between a landscape mode and a portrait mode. The main display unit 140 may include at least one of a liquid crystal display (LCD), a thin film transistor liquid crystal display (TFT LCD), an organic light-emitting diode (OLED), an active matrix OLED (AMOLED), a flexible display, a bent display, and a 3D display. Among these, some displays may be implemented with a transparent or an optical transparent type transparent display so that it is possible to see the outside.

Additionally, the main display unit 140 may be prepared as a touch screen having a touch panel and thus used as an input device in addition to an output device. The touch panel may be configured to covert a change in the pressure applied to a specific portion of the display unit 140, or in the capacitance occurring at a specific portion of the display unit 140 into an electrical input signal. The touch panel may be configured to detect the pressure at the time of a touch in addition to the position and area touched. Moreover, as mentioned above, the main display unit 140 according to various embodiments of the present disclosure is configured including a touch panel and a display panel. The touch panel may be placed on the display panel. The touch panel may be implemented as an add-on type disposed on the display panel, or an on-cell type or an in-cell type inserted in the display panel. The touch panel delivers a user input responding to a user's gesture on the main display unit 140 to the main control unit 160. Herein, a user input from a touch means such as a finger or a touch pen may include a touch, multi touch, tap, double tap, long tap, tap & touch, drag, flick, press, pinch in, and pinch out. The above generation of a user input may be supported when an auxiliary display unit 240 of an auxiliary electronic device 200 described below operates as an input means.

The main storage 150 may store a program or application for the processing and control of the main control unit 160. The main storage unit 150 may temporarily store input/output data (such as phone numbers, messages, audio, media contents such as music files and video files, applications, or the like). The main storage unit 150 may store a frequency of use according to a function operation of the main electronic device 100, such as a frequency of application use, a frequency of media content playback, a frequency of use for phone numbers, messages, and multimedia.

According to an embodiment, the main storage unit 150 may include a direct mode supporting program and an indirect mode supporting program. The direct mode supporting program may include a routine for confirming direct mode setting, a routine for establishing a short range communication channel with the auxiliary electronic device 200 during communication service connection, and a routine for processing data transmitted/received during a communication service supporting process through the auxiliary electronic device 200. The indirect mode supporting program may include a routine for supporting indirect mode setting and an indirect mode activating routine for activating an indirect mode in response to an indirect mode setting request. The indirect mode activating routine may include a routine for accessing the service supporting device 300 through the second communication network 500 by activating the first network communication module 180 when a communication service connection message is received, a routine for collecting access information on the auxiliary electronic device 200 accessing the service supporting device 300, a routine for establishing a communication channel with the auxiliary electronic device 200 through the second communication network 500 on the basis of the access information, and a routine for processing communication service data of the other electronic device 101 through the auxiliary electronic device 200. The indirect mode activating routine may include a routine for attempting to connect to the other electronic device 101 on the basis of received information when a communication service connection request message is received from the auxiliary electronic device 200, a routine for processing communication service data of the other electronic device 101 through the auxiliary electronic device 200 when a connection is successful, and a routine for providing notice of a connection failure to the auxiliary electronic device 200 when the connection has failed.

The above-mentioned main storage unit 150 may have at least one type of storage medium from among a flash memory, a hard disk, a micro, and a card (such as a Secure Digital (SD) card, an eXtream digital (XD) card, or the like), a Random Access Memory (RAM), a Static RAM (SRAM), a Read-Only Memory (ROM), a Programmable ROM (PROM), an Electrically Erasable PROM (PROM), a Magnetic RAM (MRAM), a magnetic disk, and an optical disk. The main electronic device 100 may operate in relation to web storage performing the storage function of the main storage unit 150 on the internet.

Moreover, the above-mentioned embodiments of the present disclosure may be implemented in a program instruction form executable through various computer means and recorded on a computer-readable recording medium. The computer-readable recording medium may include each or a combination of program instructions, data files, and data structures. The program instructions written on the recording medium may be especially designed and configured for various embodiments of the present disclosure or may be known to computer software engineers.

The first short range communication module 170 may be a module for supporting communication within a predetermined short range through a wired/wireless method. Short range communication methods may include BLUETOOTH, Bluetooth Low Energy (BLE), Radio Frequency Identification (RFID), Infrared Data Association (IrDA), Ultra Wideband (UWB), ZigBee, and Near Field Communication (NFC). Additionally, the first short range communication module 170 may transmit/receive an application selected by a user to/from the auxiliary electronic device 200 as a short range communication connection is made to the auxiliary electronic device 200. The first short range communication module 170 may establish a short range communication channel with a short range communication module equipped in the auxiliary electronic device 200 and may then support data transmission in the above-mentioned direct mode environment. The activated or deactivated state of the first short range communication module 170 may be obtained in response to a control of the main electronic device 100 or at the request of the auxiliary electronic device 200. For example, when a direct mode setting is requested from the main input unit 120 or the main display unit 140 having an input function or a change from an indirect mode to a direct mode is requested, the first short range communication module 170 may be activated. When an indirect mode setting is requested from the auxiliary electronic device 200, the first short range communication module 170 may maintain a deactivated state or change an activated state to a deactivated state.

The first network communication module 180 may access the second communication network 500 and form a wireless link with the auxiliary electronic device 200. As forms of wireless internet technology, there are Wireless LAN (such as Wi-Fi), World Interoperability for Microwave Access (Wimax), and High Speed Downlink Packet Access (HSDPA). The first network communication module 180 may perform data conversion relating to the use of the second communication network 500. For example, the first network communication module 180 may convert communication service data that the other electronic device 101 transmits through the first communication network 400 into a format operational on the second communication network 500. Then, the first network communication module 180 may transmit the converted communication service data to the auxiliary electronic device 200 through the second communication network 500.

The first network communication module 180 may maintain its access state with respect to the second communication network 500. The first network communication module 180 may transmit a communication service connection message transmitted from the other electronic device 101 to the auxiliary electronic device 200 through the second communication network 500 while an indirect mode is set. The first network communication module 180 may receive a communication service connection request message and communication service data transmitted from the auxiliary electronic device 200 through the second communication network 500 and then may deliver them to the main control unit 160.

According to an embodiment of the present disclosure, once a direct mode execution is requested, the first short range communication module 170 may establish a short range communication channel with the auxiliary electronic device 200 and then may support direct data transmission between the main electronic device 100 and the auxiliary electronic device 200. The first short range communication module 170 may release the short range communication channel in correspondence to predetermined conditions. For example, the first short range communication module 170 may release the short range communication channel when the short range communication module of the auxiliary electronic device 200 is out of a communication range. If a direct mode is terminated as the short range communication channel is released in response to the above predetermined conditions, the main control unit 160 automatically activates the first network communication module 180 according to a predefined setting, so that the first network communication module 180 performs an indirect mode. According to another embodiment, the main control unit 160 may confirm whether short range communication channel establishment with the auxiliary electronic device 200 is possible at a predefined constant period or in real time. If short range communication channel establishment is possible, the main control unit 160 may terminate an indirect mode according to a predefined setting and then perform a direct mode based on the first short range communication module 170.

According to various embodiments, once an indirect mode execution is requested, the main electronic device 100 may activate the first network communication module 180 to establish a communication channel with the second communication network 500. When direct mode switching is requested from a user or a predetermined condition, , such as a direct mode execution based on the first short range communication module 170, is available, the main electronic device 100 may deactivate the first network communication module 180 and control a direct mode execution based on the first short range communication module 170.

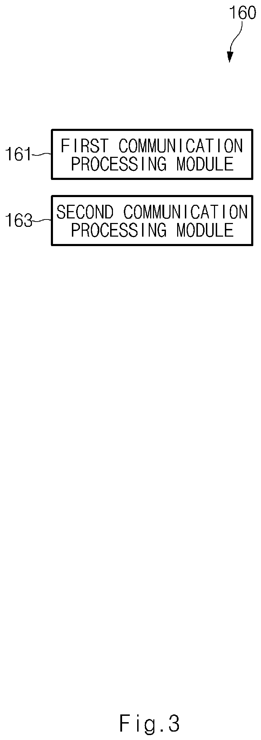

The main control unit 160 may perform the processing and delivery of various signals relating to a control of the main electronic device 100 and the delivery and processing of data. For example, the main control unit 160 may perform the signal processing relating to one mode support of a direct mode and an indirect mode of the auxiliary electronic device 200 while supporting communication service. The main control unit 160 may include a configuration such as that shown in FIG. 3.

Moreover, various embodiments described in the present disclosure may be realized on a computer or similar device-readable recording medium by using software, hardware, or a combination thereof. In terms of hardware realization, the embodiments described in the present disclosure may be realized by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units for performing other functions. In some cases, embodiments described in this specification may be realized by the main control unit 160 itself. In terms of software realization, embodiments such as procedures and functions described in this specification may be realized using additional software modules. Each of the software modules may perform at least one function and operation described in this specification.

Fig 3 is a view illustrating a configuration of a main control unit according to an embodiment of the present disclosure.

Referring to Fig. 3, the main control unit 160 includes a first communication processing module 161 and a second communication processing module 163.

The first communication processing module 161 may process a direct mode execution of the main electronic device 100. The first communication processing module 161 may perform menu, item, icon, button key allocations relating to a direct mode execution. Once a direct mode execution is requested, the first communication processing module 161 may activate the first short range communication module 170 so as to establish a short range communication channel. The first communication processing module 161 may deliver a communication service connection message from the other electronic device 101 to the auxiliary electronic device 200 through a short range communication channel. When the auxiliary electronic device 200 delivers a communication service connection permission message, the first communication processing module 161 may establish a communication channel with the other electronic device 101 through the first communication network 400. The first communication processing module 161 may convert communication service data received from the other electronic device 101 into data of a format applicable to the first short range communication module 170 and then may directly transmit the converted data to the auxiliary electronic device 200. The first communication processing module 161 may convert data that the auxiliary electronic device 200 transmits based on short range communication to be applicable to the first communication network 400 and then transmit the converted data to the other electronic device 101 through the communication module 110.

The second communication processing module 163 may process an indirect mode execution of the main electronic device 100. The second communication processing module 163 may perform menu, item, icon, button key allocations relating to an indirect mode execution. Once an indirect mode execution is requested, the second communication processing module 163 may activate the first network communication module 180 so as to establish a network communication channel. In this process, the second communication processing module 163 may collect access information on the auxiliary electronic device 200 from the service supporting device 300 connected to the second communication network 500. The second communication processing module 163 may establish a network communication channel with the auxiliary electronic device 200 on the basis of the collected access information and the second communication network 500. The second communication processing module 163 may deliver a communication service connection message from the other electronic device 101 to the auxiliary electronic device 200 through a network communication channel established based on the second communication network 500. When the auxiliary electronic device 200 delivers a communication service connection permission message, the second communication processing module 163 may support communication service connection with the other electronic device 101 through the first communication network 400 and the second communication network 500. The second communication processing module 163 may convert communication service data received from the other electronic device 101 into data of a format applicable to the second network 500 and may then transmit the converted data to the auxiliary electronic device 200. The second communication processing module 163 may convert data that the auxiliary electronic device 200 transmits through the second communication network 500 to be applicable to the first communication network 400 and then transmit the converted data to the other electronic device 101 through the communication module 110.

The second communication processing module 163 may receive a call connection request message from the auxiliary electronic device 200 through the second communication network 500. In this process, the second communication processing module 163 may receive the access information on the second communication network 500 of the auxiliary electronic device 200. The second communication processing module 163 may try communication service connection based on the first communication network 400 with the other electronic device 101 by using information written in the received call connection request message. When the other electronic device 101 permits communication service connection, the second communication processing module 163 may establish a network communication channel with the auxiliary electronic device 200 on the basis of the access information on the second communication network 500 of the auxiliary electronic device 200. The second communication processing module 163 may transmit communication service data that the other electronic device 101 transmits through the first communication network 400 to the auxiliary electronic device 200 through the network communication channel of the second communication network 500. The second communication processing module 163 may transmit communication service data transmitted from the auxiliary electronic device 200 to the other electronic device 101 through the first communication network 400. In this process, the second communication processing module 163 may perform data conversion and transmission to allow a data type applied to the first communication network 400 to be applicable to the second communication network 500. Additionally, the second communication processing module 163 may perform data conversion and transmission to allow a data type applied to the second communication network 500 to be applicable to the first communication network 400.

According to various embodiments, the second communication processing module 163 may upload at least one of unconfirmed communication service data(for example, information relating to not yet handled calls or messages, such as missed call information and unconfirmed/unread message information) received before indirect mode execution into the service supporting device 300 in real time. According to another embodiment, the second communication processing module 163 may accumulate unconfirmed communication service data and upload them into the service supporting device 300 at some point. For example, when the accumulated amount of unconfirmed communication service data is greater than a predetermined amount, the second communication processing module 163 may upload them into the service supporting device 300. On receiving an indirect mode execution request message from the auxiliary electronic device 200, the second communication processing module 163 may transmit unconfirmed communication service data to the service supporting device 300.

According to various embodiments, the second communication processing module 163 may establish a network communication channel with the auxiliary electronic device 200 in relation to unconfirmed communication service data transmission. The second communication processing module 163 may transmit unconfirmed communication service data on the basis of the established network communication network. Here, the second communication processing module 163 may transmit some of the unconfirmed communication service data. For example, the second communication processing module 163 may transmit the predetermined number of data among the unconfirmed communication service data to the auxiliary electronic device 200. Or, the second communication processing module 163 may transmit the entire unconfirmed communication service data to the auxiliary electronic device 200.

If an indirect mode execution condition is satisfied during direct mode execution, the first communication processing module 161 may deliver communication service related processing to the second communication processing module 163. The first communication processing module 161 may control the first short range communication module 170 so that the first short range communication module 170 may be deactivated. For example, the first communication processing module 161 may process indirect mode switching if an event requesting indirect mode execution is received or a short range communication channel release condition is satisfied during direct mode execution. For example, once a short range communication is released based on a predetermined condition, the first communication processing module 161 may request indirect mode execution from the second communication processing module 163.

If an indirect mode execution condition is satisfied during direct mode execution, the second communication processing module 163 may receive transferred communication service related processing from the first communication processing module 161. The second communication processing module 163 may activate the first network communication module 180 in relation to indirect mode execution. The second communication processing module 163 may control data transmitted/received between the other electronic device 101 and the auxiliary electronic device 200, so that the data are transmitted/received through the first network communication module 180 and the second communication network 500.

If a direct mode execution condition is satisfied during indirect mode execution, the second communication processing module 163 may deliver communication service related processing to the first communication processing module 161 The second communication processing module 163 may control the first network communication module 180 so that the first network communication module 180 may be deactivated. Once mode switching occurs, the first communication processing module 161 may activate the first short range communication module 170, and as mentioned above, may control communication service data transmission with the other electronic device 101 and the auxiliary electronic device 200 on the basis of a short range communication channel. For example, once an event requesting direct mode execution is received from the main input unit 120, the main display unit 140 having an input function, or the auxiliary electronic device 200 or a predetermined direct mode execution available condition is satisfied, the first communication processing module 161 may process direct mode switching.

As mentioned above, the main electronic device 100, according to various embodiments of the present disclosure, includes the communication module 110 establishing a communication channel based on the first communication network 400, the first network communication module 180 establishing a network communication channel based on the second communication network 500, and the main control unit 160 controlling indirect mode execution that transmits data transmitted/received through the communication module 110 to the auxiliary electronic device 200 connected through the first network communication module 180 in response to a set mode or transmits data transmitted/received to/from the auxiliary electronic device 200 through the first network communication module 110 by using the communication module 110.

According to various embodiments, the main control unit 160 may transmit at least some of unconfirmed communication service data among data received through the communication module 110 to the auxiliary electronic device 200.

According to various embodiments, the main control unit 160 may transmit to the service supporting device 300 connected to the first network communication module 180 in real time at least some of the unconfirmed communication service data, or may transmit the at least some data to the service supporting device 300 at the indirect mode execution request of the auxiliary electronic device 200.

According to various embodiments, the main control unit 160 may establish the network communication network channel based on the first network communication module 180 with the auxiliary electronic device 200, and may transmit the unconfirmed communication service data to the auxiliary electronic device 200 through the network communication channel.

According to various embodiments, the main electronic device 100 further includes a first short range communication module 170 establishing a short range communication channel, and if the short range communication channel release event occurs during a direct mode execution based on the shot range communication channel with the auxiliary electronic device 200, the main control unit 160 may control the indirect mode execution.

According to various embodiments, the main electronic device 100 further includes a first shot range communication module 170 establishing a short range communication channel, and if an event requesting the establishment of the short range communication channel during the indirect mode execution with the auxiliary electronic device 200, the main control unit 160 may stop the indirect mode execution and control direct mode execution with the auxiliary electronic device 200 based on the short range communication channel.

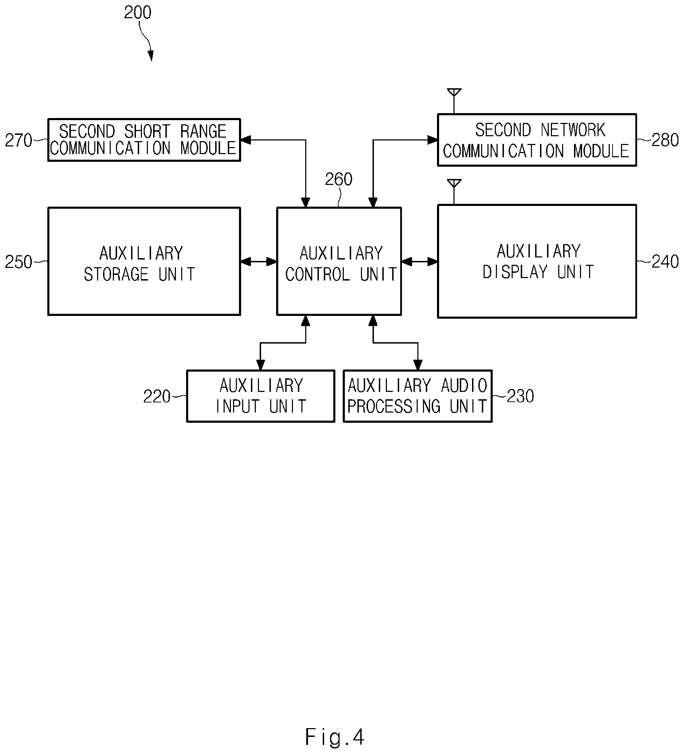

Fig 4 is a view illustrating a configuration of an auxiliary electronic device according to an embodiment of the present disclosure.

Referring to Fig. 4, the auxiliary electronic device 200 includes an auxiliary input unit 220, an auxiliary audio processing unit 230, an auxiliary display unit 240, an auxiliary storage unit 250, a second short range communication module 270, a second network communication module 280, and an auxiliary control unit 260. If supporting video call service, the auxiliary electronic device 200 also may include a camera module.

The auxiliary input unit 220 may generate an input signal of the auxiliary electronic device 200. The auxiliary input unit 220 may include at least one button key. The at least one button key may be disposed at least one of a side, front, and rear of the auxiliary electronic device 200. The at least one button key may include a plurality of keys disposed in a matrix. The auxiliary input unit 220 may include at least one of numeric keys, character keys, and navigation keys. Moreover, when the auxiliary display unit 240 includes a touch sheet or a touch panel, the auxiliary input unit 220 may include the auxiliary display unit 240 as an input means.

The auxiliary input unit 220 may generate an input signal relating to indirect mode setting and an input signal relating to indirect mode release. The auxiliary input unit 220 may generate an input signal requesting direct mode switching during indirect mode execution. The auxiliary input unit 220 may generate an input signal corresponding to specific menu selection, an input signal corresponding to phone number input, an input signal relating to phone book search, and an input signal relating to message writing. An input signal generated from the auxiliary input unit 220 may be delivered to the auxiliary control unit 260, and used as an instruction or instruction set relating to corresponding function performance.

The auxiliary audio processing unit 230 may support audio signal processing of the auxiliary electronic device 200. For example, the auxiliary audio processing unit 230 may include a speaker relating to outputs of various audio data such as audio data transmitted from the main electronic device 100, audio data stored in the communication module 110 or 250, and audio data received from an external service device. The auxiliary audio processing unit 230 may include a mike collecting audio data in relation to call service support. The auxiliary audio processing unit 230 may output a notification or effect sound guiding indirect mode setting and release, a notification or effect sound guiding direct mode setting and release, and a notification or effect sound guiding switching from an indirect mode to a direct mode or switching from a direct mode to an indirect mode. The above-mentioned notification or effect sound output may be omitted in correspondence to user setting.

According to various embodiments, the auxiliary electronic device 200 may support a voice recognition function and a voice command function. The auxiliary audio processing unit 230 may recognize an audio signal received during a process for supporting a voice recognition function or a voice command function, as voice. The auxiliary electronic device 200 may include a voice recognition algorithm relating to voice recognition support or may access a service server device supporting a voice recognition algorithm.

According to various embodiments, the auxiliary electronic device 200 may include a vibration module. While the auxiliary audio processing unit 230 outputs an audio signal, or separately from this, the auxiliary electronic device 200 may generate vibration corresponding to a specific function performance. For example, the auxiliary electronic device 200 may output vibration corresponding to communication service connection message reception from the main electronic device 100 during indirect mode execution. The auxiliary electronic device 200 may output vibration in correspondence to switching from an indirect mode to a direct mode or switching from a direct mode to an indirect mode The auxiliary electronic device 200 may output vibration corresponding to message service based text message or multimedia message reception from the main electronic device 100 in an indirect mode or a direct mode.

The auxiliary input unit 240 may display various screens in relation to operations of the auxiliary electronic device 200. According to an embodiment, the auxiliary display unit 240 may output a standby screen. The standby screen may include time information. The auxiliary display unit 240 may display only some areas displaying the time information on the standby screen brighter compared to other areas. Or, the auxiliary display unit 240 may display only some areas displaying the time information and function related icon areas currently being executed on the standby screen brighter compared to other areas. Here, the time information may include at least one of year, month, day, hour, minute, and second. According to an embodiment, the auxiliary display unit 240 may display an indirect mode or direct mode related menu item or an indirect mode related icon. The auxiliary display unit 240 may display an indirect mode or direct mode setting and release related indicator or pop-up window.

According to various embodiments, the auxiliary display unit 240 may display a screen relating to communication service support. For example, the auxiliary display unit 240 may display a screen relating to communication service connection message reception, a screen relating to communication service connection permission, a screen relating to communication service connection, and a screen relating to communication service termination. According to various embodiments, the auxiliary display unit 240 may display a screen relating to communication service connection request. For example, the auxiliary display unit 240 may display a dial screen relating to phone number input, a phone book search screen, and a call history screen.

The auxiliary electronic device 200 may store phone book information in advance or receive the phone book information from the main electronic device 100 and then output the phone book information. The auxiliary electronic device 200 may receive call history information from the main electronic device 100 and then output it. While outputting the call history information, the auxiliary electronic device 200 may output a history of calls performed through the auxiliary electronic device 200 and a history of calls performed through the main electronic device 100 distinguishably. The auxiliary electronic device 200 may output only a history of calls performed through the auxiliary electronic device 200 and also, output the call history together with or distinctively from a history of calls performed through the main electronic device 100 in correspondence to a setting or request.

The auxiliary storage unit 250 may store an application or program and data relating to operations of the auxiliary electronic device 200. For example, the auxiliary storage unit 250 may store an operating system and call service program supporting operations of the auxiliary electronic device 200. The call service program may include an indirect mode related routine and a direct mode related routine. For example, the call service program may include an indirect mode setting and release supporting routine and a direct mode setting and release supporting routine in the auxiliary electronic device 200. The call service program may include a widget program relating to indirect mode and direct mode settings or releases. The auxiliary storage unit 250 may be prepared in a similar form to the main storage 150 of the main electronic device 100, and may record data and programs for operations of the auxiliary electronic device 200.

The second short range communication module 270 may establish a communication channel with the first short range communication module 170 of the main electronic device 100. The second short range communication module 270 may be configured using a communication module compatible with or identical to the first short range communication module 170. The second short range communication module 270 may have a standby state in correspondence to setting. Or, the second short range communication module 270 may establish a short range communication channel by scanning the first short range communication module 170 in correspondence to setting. The second short range communication module 270 may receive data from the main electronic device 100 and then deliver the received data to the auxiliary electronic device 260 during direct mode execution. The second short range communication module 270 may transmit audio data collected by the auxiliary audio processing unit 230 and a message inputted by the auxiliary input unit 220 to the main electronic device 100 during direct mode execution. The second short range communication module 270 may be deactivated during direct mode release or indirect mode execution.

The second network communication module 280 may be a communication module capable of establishing a communication channel with the second communication network 500. For example, the second network communication module 280 may be a wireless internet communication module. The second network communication module 280 may establish a communication channel with the service supporting device 300 through the second communication network 500. The second network communication module 280 may provide access information, for example, IP address information, to the service supporting device 300. The second network communication module 280 may establish a communication channel with the first network communication module 180 of the main electronic device 100. The second network communication module 280 may receive data from the main electronic device 100 through the second communication network 500 and then deliver the received data to the auxiliary control unit 260. The second network communication module 280 may deliver at least some of text data, audio data, and video data collected in response to a control of the auxiliary control unit 260 to the first network communication module 180 through the second communication network 500. The second network communication module 280 may be activated during indirect mode execution. The second network communication module 280 may be deactivated during direct mode execution. According to another embodiment, the second network communication module 280 may operate separated from a direct mode. For example, the second network communication module 280 may access the service supporting device 300 during direct mode execution through the second communication network 500 in response to a control of the auxiliary control unit 260. Or, the second network communication module 280 may establish a communication channel with a specific service server connected to an in internet network through the second communication network 500.

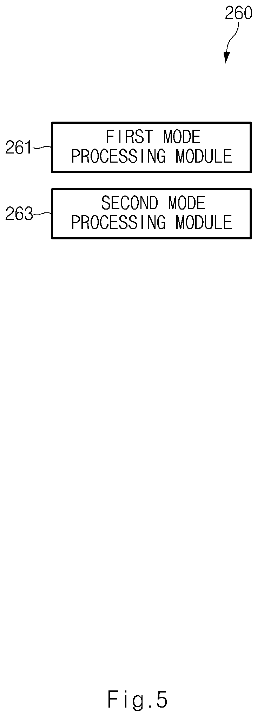

The auxiliary control unit 260 may perform various signal flow controls and signal processing and data transmission and processing relating to a control of the auxiliary electronic device 200. According to an embodiment, the auxiliary control unit 260 may perform direct mode execution control, indirect mode execution control, and switching between a direct mode and an indirect mode. In this regard, the auxiliary control unit 260 may include a configuration such as that shown in FIG. 5.

Fig 5 is a view illustrating a configuration of an auxiliary control unit according to an embodiment of the present disclosure.

Referring to Fig. 5, the auxiliary control unit 260 includes a first mode processing unit 261 and a second mode processing unit 263.

The first mode processing unit 261 may process a direct mode of the auxiliary electronic device 200. According to an embodiment, on receiving a scan signal based on the first short range communication module 170 of the main electronic device 100, the first mode processing unit 261 may perform a control to output a response signal corresponding to the corresponding scan signal through the second short range communication module 270. On receiving a short range communication channel establishment request of the main electronic device 100, in response to this, the first mode processing unit 261 may establish a shirt range communication channel with the main electronic device 100. The first mode processing unit 261 may process data received from the main electronic device 100 through the established short range communication channel, and transmit signals inputted from the auxiliary input unit 220 and the auxiliary audio processing unit 230 to the main electronic device 100.

According to another embodiment, the first mode processing unit 261 may scan the main electronic device 100 in response to an input signal generated from the auxiliary input unit 220. The first mode processing unit 261 may establish a short range communication channel with the main electronic device 100 in correspondence to whether the main electronic device 100 permits communication. The first mode processing unit 261 may transmit an input signal inputted from the auxiliary input unit 220 to the main electronic device 100 through a short range communication channel.

According to various embodiments, once an event requesting switching from a direct mode to an indirect mode occurs, the first mode processing unit 261 may deliver processing for direct mode release and indirect mode switching to the second mode processing unit 263. In the process, the first mode processing unit 261 may perform a control to deactivate the second short range communication module 270. According to an embodiment, when the auxiliary electronic device 200 leaves a communication range for direct mode, the first mode processing unit 261 may automatically perform indirect mode switching at the corresponding event occurrence time or after a predetermined certain time. Or, the first mode processing unit 261 may output a pop-up window for asking about mode switching, and according to the confirmation, may request the second mode processing unit 263 of indirect mode switching. On receiving the indirect mode switching, the second mode processing unit 263 may control indirect mode execution processing according to whether the second communication network 500 is accessible.

The second mode processing unit 263 may process an indirect mode of the auxiliary electronic device 200. According to an embodiment, the second mode processing unit 263 may execute an indirect mode in response to a signal inputted from the auxiliary input unit 220 or the auxiliary display unit 240 having an input function. In the process, the second mode processing unit 263 may control an access of the second communication network 500 by activating the second network communication module 280. The second mode processing unit 263 may access the service supporting device 300 connected to the second communication network 500. The service supporting device 300 may collect access information on the second communication network 500 of the auxiliary electronic device 200. The second mode processing unit 263 may request the service supporting device 300 to transmit a message requesting indirect mode execution to the main electronic device 100. As the access information is changed in correspondence to a movement of the auxiliary electronic device 200, the second mode processing unit 263 may notify the service supporting device 300 of the access information change. Or, the service supporting device 300 may trace an access state of the auxiliary electronic device 200 and update the access state in correspondence to a change.

According to various embodiments, when an input signal relating to indirect mode execution is received, the auxiliary electronic device 200 may not access the second communication network 500. For example, when an access point supporting an access to the second communication network 500 is not placed around or the degree of signal intensity is less than a predetermined level, the auxiliary electronic device 200 may not access the access point. Even when indirect mode execution is requested, if an access of the second communication network 500 is unavailable, the second mode processing unit 263 may provide a notification about this. For example, the second mode processing unit 263 may output at least one of a message, a notification sound, and a specific vibration pattern corresponding to an unavailable access to the second communication network 500. The second mode processing unit 263 may control indirect mode execution at the accessible time of the second communication network 500. In the process, the second mode processing unit 263 may automatically perform indirect mode execution. Or, after outputting a pop-up window for asking about indirect mode execution, the second mode processing unit 263 may control the indirect mode execution according to the confirmation.

The second mode processing unit 263 may establish a network communication channel based on the second communication network 500 with the main electronic device 100. On receiving a communication service connection message of the other electronic device 101 from the main electronic device 100, the second mode processing unit 263 may output the received message through one of the auxiliary audio processing unit 230 and the auxiliary display unit 240. Once an input signal corresponding to communication service connection permission occurs, the second mode processing unit 263 may transmit the connection permission to the main electronic device 100. The second mode processing unit 263 may control communication service data transmission with the other electronic device 101. For example, the second mode processing unit 263 may control the other electronic device 101, so that the other electronic device 101 may receive and output audio data transmitted through the main electronic device 100. The second mode processing unit 263 may perform a control so as to transmit audio data collected by the auxiliary audio processing unit 230 to the other electronic device 101 through the main electronic device 100.

On receiving a request signal for information (such as a phone number) corresponding to a communication service connection request and a call making request signal from the auxiliary input unit 220 or the auxiliary display unit 240 having an input function, the second mode processing unit 263 may transmit the request signal to the service supporting device 300 through the second communication network 500. In this process, the second mode processing unit 263 may transmit access information on the auxiliary electronic device 200 to the service supporting device 300. The service supporting device 300 may deliver a communication service connection request message and the access information on the auxiliary electronic device 200 to the main electronic device 100. The main electronic device 100 may perform communication service connection with the other electronic device 101 on the basis of the received information. When the communication service connection with the main electronic device 100 is successful, the second mode processing unit 263 may establish a network communication channel in correspondence to a communication service connection request of the main electronic device 100. The second mode processing unit 263 may perform communication service connection with the other electronic device 101 through a network communication channel connected to the main electronic device 100. When the communication service connection between the main electronic device 100 and the other electronic device 101 is failed, the second mode processing unit 263 may receive a communication service connection failure message from the main electronic device 100. In this process, the second mode processing unit 263 may establish a network communication channel with the main electronic device 100. The second mode processing unit 263 may output the received communication service connection failure message through one of the auxiliary audio processing unit 230 and the auxiliary display unit 240. If a communication connection request does not occur again within a predetermined time or after the communication service connection failure message is received, the second mode processing unit 263 may release the network communication channel.

According to various embodiments, the second mode processing unit 263 may obtain access information on the main electronic device 100 from the service supporting device 300, and establish a network communication channel based on the second communication network 500 with the main electronic device 100 on the basis of the obtained access information. The second mode processing unit 263 may transmit a communication service connection request message to the main electronic device 100 through the established network communication channel. Once the main electronic device 100 performs communication service connection with the other electronic device 101 on the basis of the communication service connection request message, the second mode processing unit 263 may process communication service connection with the other electronic device 101 through the main electronic device 100. Or, the second mode processing unit 263 may perform a control to receive a communication service connection failure message from the main electronic device 100 and output the received message. When communication service connection is failed, the second mode processing unit 263 may perform a control to release a network communication channel.

According to various embodiments, when an event requesting indirect mode execution occurs in correspondence to set schedule information or an input signal, the main electronic device 100 may perform an operation for indirect mode execution. In this process, the main electronic device 100 may access the second communication network 500 by activating the first network communication module 180. Then, the main electronic device 100 may collect access information on the auxiliary electronic device 200 from the service supporting device 300 or may transmit an indirect mode execution request message to the auxiliary electronic device 200 through the service supporting device 300. On receiving the indirect mode execution request message from the main electronic device 100, the second mode processing unit 263 of the auxiliary electronic device 200 may establish a network communication channel with the main electronic device 100.

According to various embodiments, when an input signal requesting indirect mode release, the second mode processing unit 263 may release the access state of the second communication network 500. Additionally, when indirect mode release is requested, the second mode processing unit 263 may release the network communication channel established with the main electronic device 100. When an indirect mode release request or a direct mode switching request occurs, the second mode processing unit 263 may deactivate the second network communication module 280. On receiving an indirect mode execution request from the first mode processing unit 261, as described above, the second mode processing unit 263 may activate the second network communication module 280 and perform access processing on the second communication network 500 and the service supporting device 300.

As mentioned above, the auxiliary electronic device 200 includes an auxiliary control unit 260 performing a control to transmit an indirect mode execution request message requesting communication service data transmission through the first communication network 400 to the main electronic device 100 through the second communication network 500 and a second network communication module 280 establishing a network communication channel based on the second communication network 500.

According to various embodiments, the auxiliary control unit 260 may establish a network communication channel with the main electronic device 100, and receive at least some of unconfirmed communication service data among data that the main electronic device 100 receives by using a communication module through the network communication channel.

According to various embodiments, the auxiliary control unit 260 may establish a network communication channel with the service supporting device 300, and receive at least some of unconfirmed communication service data that the main electronic device 100 receives from the service supporting device 300.

According to various embodiments, the auxiliary control unit 260 may establish a network communication channel with the service supporting device 300, and transmit access information on the second communication network 500 to the service supporting device 300.

According to various embodiments, the auxiliary electronic device 200 further includes a second short range communication module 270 establishing a short range communication channel, and when the short range communication channel release event occurs during direct mode execution based on the short range communication channel with the main electronic device 100, the auxiliary control unit 260 may control the indirect mode execution.

According to various embodiments, the auxiliary electronic device 200 further includes an auxiliary display unit 240 outputting a message notifying the short range communication channel release or establishment and a message notifying the indirect mode switching.

According to various embodiments, the auxiliary electronic device 200 further includes an auxiliary display unit 240 outputting a notification message when the second communication network 500 is inaccessible during the indirect mode switching.

According to various embodiments, the auxiliary electronic device 200 further includes a second short range communication module 270 establishing a short range communication channel, and when the indirect mode release event occurs, the auxiliary control unit 260 may control the direct mode execution based on a short range communication channel with the main electronic device 100.

According to various embodiments, the auxiliary electronic device 200 further includes an auxiliary display unit 240 outputting a widget relating to the indirect mode execution or release setting.

According to various embodiments, the auxiliary electronic device 200 further includes an auxiliary display unit 240 displaying at least one of a dial screen into which at least one of a phone number or text is inputted, an information displaying screen displaying a stored phone book or a phone book provided from the main electronic device 100, and a call list screen including at least some of a call list provided from the main electronic device 100 and a stored call list.

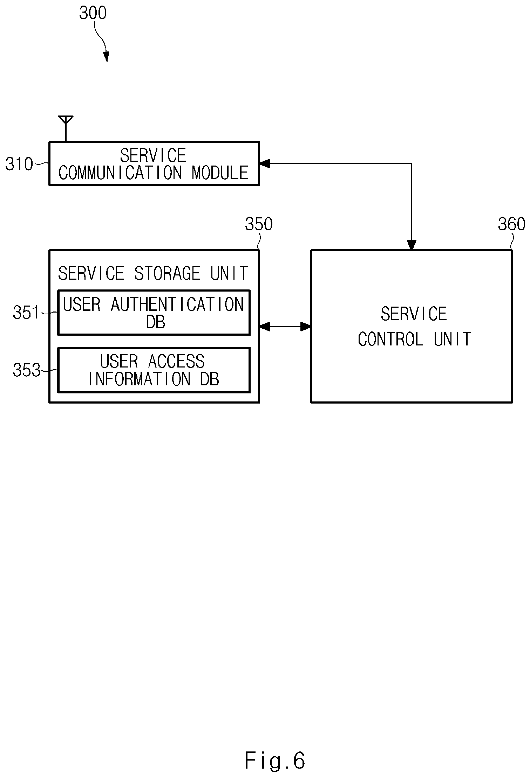

Fig 6 is a view illustrating a configuration of a service supporting device according to an embodiment of the present disclosure.

Referring to Fig. 6, the service supporting device 300 includes a service communication module 310, a service storage unit 350, and a service control unit 360.

The service communication module 310 may support an access of the second communication network 500. For example, the service communication module 310 may be an internet communication module. The service communication module 310 may maintain an access state with the second communication network 500 and establish a network communication channel with at least one of the main electronic device 100 and the auxiliary electronic device 200. According to an embodiment, the service communication module 310 may receive user authentication information of the main electronic device 100 and access information on the main electronic device 100. The service communication module 310 may receive access information on the auxiliary electronic device 200. The service communication module 310 may receive an access information request of the auxiliary electronic device 200 from the main electronic device and may deliver the access information on the auxiliary electronic device 200 to the main electronic device 100. According to various embodiments, when communication service connection of the main electronic device 100 is performed through the service supporting device 300, the service communication module 310 may relay data transmission between the main electronic device 100 and the auxiliary electronic device 200. For example, the service communication module 310 may receive communication service data from the main electronic device 100 and transmit the received data to the auxiliary electronic device 200, and may deliver communication service data from the auxiliary electronic device 200 to the main electronic device 100.

The service storage unit 350 may store various programs and data for operations of the service supporting device 300. According to an embodiment, the service storage unit 350 includes a user authentication database 351 and a user access information database 353.

The user authentication database 351 may store information on the authentication and identification of the main electronic device 100 and the auxiliary electronic device 200. For example, the user authentication database 351 may store identification information of the main electronic device 100, ID and password information relating to the registration of the main electronic device 100, and identification information of the auxiliary electronic device 200 linked to the main electronic device 100. Herein, the identification information of the main electronic device 100 and the auxiliary electronic device 200 may include device specific information, for example, MAC address information, phone number information, or user input specific information. The user authentication database 351 may be used for providing reference information compared with authentication information delivered from the main electronic device 100 as connecting to the main electronic device 100.

The user access information database 353 may store access information on the main electronic device 100 and the auxiliary electronic device 200. For example, the user access information database 353 may include address information allocated from the second communication network 500 while the main electronic device 100 and the auxiliary electronic device 200 access the second communication network 500. In response to a change in access situation relating to the second communication network 500 of the main electronic device 100 and the auxiliary electronic device 200, as address information is changed, the user access information database 353 may update information correspondingly.

According to various embodiments, the service storage unit 350 may receive unconfirmed communication service data from the main electronic device 100 and then store the received data. Herein, the unconfirmed communication service data, as described above, may include at least one of missed call information and unconfirmed message information of the main electronic device 100. The unconfirmed communication service data may be uploaded each time they occur and then stored in the service storage unit 350 depending on a design approach. Or, the unconfirmed communication service data may be requested from the main electronic device 100 according to a control of the service control unit 360 in response to a request of the auxiliary electronic device 200 or at the time of when the auxiliary electronic device 200 requests indirect mode execution. The unconfirmed communication service data stored in the service storage unit 350 may be transmitted to the auxiliary electronic device 200 at the access time of the auxiliary electronic device 200 or at the request of the auxiliary electronic device 200.

The service control unit 360 may perform signal processing and data processing relating to operations of the service supporting device 300. For example, the service control unit 360 may support authentication information collection, storage, and management for the authentication of the main electronic device 100. The service control unit 360 may collect identification information of the main electronic device 100 and identification information of the auxiliary electronic device 200 in response to an indirect mode registration request of the main electronic device 100 and the auxiliary electronic device 200. The service control unit 360 may collect, store, and manage the access information on the main electronic device 100 at the access time of the main electronic device 100. The service control unit 360 may collect, store, and manage the access information on the auxiliary electronic device 200 at the access time of the auxiliary electronic device 200. In this process, the service control unit 360 may manage the collected access information on the basis of the identification information of the main electronic device 100 and the auxiliary electronic device 200.

On receiving a message requesting indirect mode execution from the auxiliary electronic device 200, the service control unit 360 may deliver the received message to the main electronic device 100. Once the main electronic device 100 provides a response signal corresponding to the indirect mode execution, the service control unit 360 may deliver the corresponding response signal to the auxiliary electronic device 200. According to an embodiment, on receiving a communication service connection message that the other electronic device 101 transmits from the main electronic device 100, the service control unit 360 may deliver the message to the auxiliary electronic device 200. According to another embodiment, in response to a request of the main electronic device 100, the service control unit 360 may deliver access information on the auxiliary electronic device 200 to the main electronic device 100. According to various embodiments, on receiving a communication service connection request message from the auxiliary electronic device 200, the service control unit 360 may deliver the received message to the main electronic device 100. In this process, the service control unit 360 may transmit the access information on the auxiliary electronic device 200 to the main electronic device 100. According to another embodiment, in response to a request of the auxiliary electronic device 200, the service control unit 360 may deliver the access information on the main electronic device 100 to the auxiliary electronic device 200. According to this embodiment, the auxiliary electronic device 200 may establish a network communication channel with the main electronic device 100 on the basis of the access information on the main electronic device 100 provided from the service supporting device 300. The auxiliary electronic device 200 may deliver the communication service connection request message to the main electronic device 100 through the second communication network 500.

As mentioned above, the service supporting device 300 includes the service communication module 310 establishing a network communication channel with the main electronic device 100 connected to the first communication network 400 through the second communication network 500 and establishing a network communication channel with the auxiliary electronic device 200 using transmission/reception data based on the first communication network 400 of the main electronic device 100 and the service control unit 360 performing a control to establish a network communication channel of the main electronic device 100 and the auxiliary electronic device 200.

According to various embodiments, the service control unit 360 may provide information on access to the second communication network 500 of the auxiliary electronic device 200 to the main electronic device 100.

According to various embodiments, the service control unit 360 may relay data transmission between the main electronic device 100 and the auxiliary electronic device 200.

According to various embodiments, the service supporting device 300 further includes the service storage unit 350 receiving unconfirmed communication service data from the main electronic device 100 and storing the received data.

According to various embodiments, the service control unit 360 may perform a control to transmit the unconfirmed communication service data to the auxiliary electronic device 200 at the access time of the auxiliary electronic device 200 or at the request of the auxiliary electronic device 200.

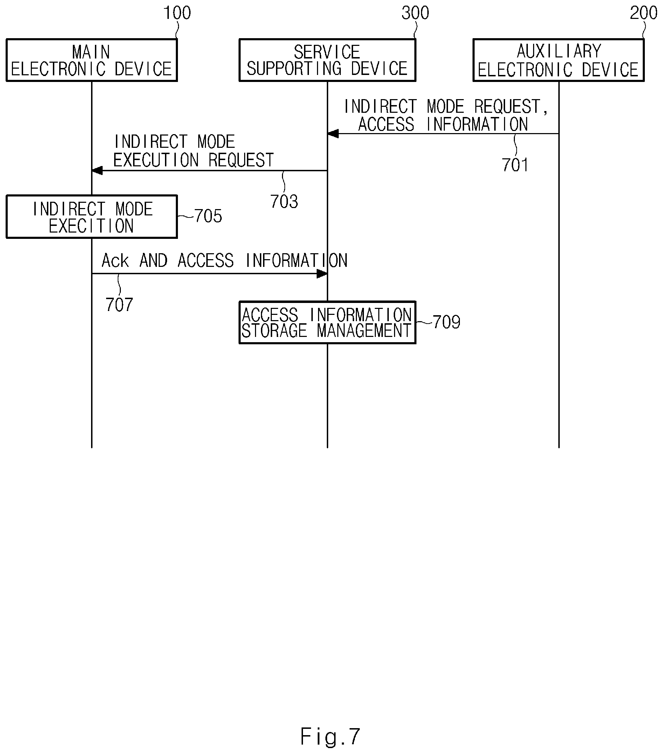

Fig. 7 is a view illustrating a communication service operating method relating to communication service setting according to an embodiment of the present disclosure. As mentioned above, the service supporting device 300 may pre-store indirect mode registration information on the main electronic device 100 and the auxiliary electronic device 200. The main electronic device 100 may access the service supporting device 300 through the second communication network 500, register user authentication information, and request indirect mode service registration. The auxiliary electronic device 200 may provide identification information to the service supporting device 300 during an indirect mode service registration request process. The service supporting device 300 may register the main electronic device 100 and the auxiliary electronic device 200 as devices executing an indirect mode. The main electronic device 100 may be in a state of when activating the first network communication module 180 and providing access information to the service supporting device 300 through the second communication network 500.

According to various embodiments, the main electronic device 100 and the auxiliary electronic device 200 may install applications or programs for indirect mode support applied to various embodiments of the present disclosure. The main electronic device 100 and the auxiliary electronic device 200 may execute information registration and indirect mode standby state in response to an input signal activating an application for indirect mode support.

Referring to Fig. 7, in relation to the communication service operating method relating to communication service setting, the auxiliary electronic device 200 may transmit an indirect mode message and access information to the service supporting device 300 in response to an indirect mode execution request in operation 701. For example, the auxiliary electronic device 200 may receive a user input requesting indirect mode execution from the input unit 220 or the auxiliary display unit 240 having an input function. Or, the auxiliary electronic device 200 may receive a request on indirect mode switching in correspondence to a predefined condition in a direct mode execution situation. On receiving an indirect mode request message from the auxiliary electronic device 200, the service supporting device 300 may confirm access information on the main electronic device 100 registered together with the auxiliary electronic device 200. The service supporting device 300 may transmit an indirect mode execution request message to the main electronic device 100 on the basis of the confirmed access information in operation 703.

In operation 705, the main electronic device 100 may perform indirect mode execution in correspondence to the indirect mode execution request message reception. The main electronic device 100 may output notification information on the indirect mode execution. Or, the main electronic device 100 may perform the indirect mode execution through background processing. In correspondence to this, the main display unit 140 of the main electronic device 100 may maintain a previous state, for example, a turn-off state, without additional pop-up output. In operation 707, the main electronic device 100 may transmit response information (such as Ack) for indirect mode execution and access information to the service supporting device 300. In operation 709, the service supporting device 300 may perform access information storage management.

When the second communication network 500 is supported based on IP address information, address information may be changed in correspondence to the position of an access point that the main electronic device 100 and the auxiliary electronic device 200 access and the device characteristics of an access point. In correspondence to this, when a change in information on access to the second communication network 500 occurs, the main electronic device 100 may transmit the changed access information to the service supporting device 300. According to another embodiment, the service supporting device 300 may trace an access state of the main electronic device 100 and perform information updating when the access information is changed. Moreover, when the access information on the auxiliary electronic device 200 is changed in the second communication network 500, the auxiliary electronic device 200 may deliver the changed access information to the service supporting device 300. Herein, the service supporting device 300 may trace an access state of the auxiliary electronic device 200 and update the access information when information is changed, which is similar to the access information management of the main electronic device 100.

According to various embodiments, on receiving an indirect mode execution request message from the auxiliary electronic device 200, the main electronic device 100 may transmit predetermined information, for example, unconfirmed communication service data, to the auxiliary electronic device 200. For example, the main electronic device 100 may transmit missed call information received before indirect mode execution request message reception and unconfirmed message information to the auxiliary electronic device 200. In this process, the main electronic device 100 may upload the missed call information and the unconfirmed message information into the service supporting device 300 in real time or may upload information accumulated when an indirect mode execution request message is received. Once an access relating to an indirect mode execution request of the auxiliary electronic device 200 is performed, the service supporting device 300 may transmit the information that the main electronic device 100 updates to the auxiliary electronic device 200. On receiving information provided from the main electronic device 100 before indirect mode execution, the auxiliary electronic device 200 may output corresponding information through an output device such as the auxiliary display unit 240 or the auxiliary audio processing unit 230.

According to another embodiment, on receiving an indirect mode execution request message, the main electronic device 100 may obtain access information on the auxiliary electronic device 200 and then establish a communication channel based on the second communication network 500 with the auxiliary electronic device 200. The main electronic device 100 may directly transmit missed call information and unconfirmed message information to the auxiliary electronic device 200 through the communication channel based on the second communication network 500. After transmitting predetermined information, the main electronic device 100 may release the communication channel established with the auxiliary electronic device 200.

According to various embodiments, on receiving an indirect mode execution request, the auxiliary electronic device 200 may confirm whether the second communication network 500 is accessible. When the second communication network 500 is accessible, the auxiliary electronic device 200 may perform operations according to the following procedure. According to another embodiment, when the second communication network 500 is inaccessible, the auxiliary electronic device 200 may control message output relating to a non-executable indirect mode. The auxiliary electronic device 200 may perform access point search to confirm whether the second communication network 500 is accessible, automatically or in response to a user input. When entering into an accessible situation of the second communication network 500, for example, within an access point available range, the auxiliary electronic device 200 may control indirect mode execution automatically or through a confirmation process. When the second communication network 500 is accessed successfully and indirect mode execution is requested from the main electronic device 100, the auxiliary electronic device 200 may output a message notifying the indirect mode execution.

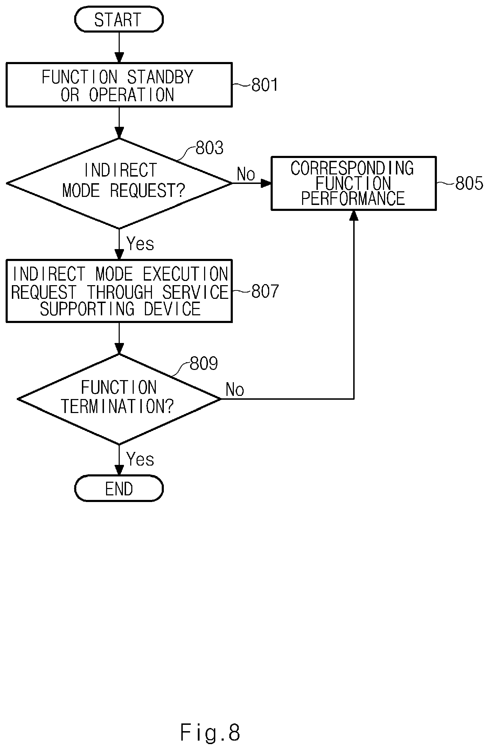

Fig. 8 is a flowchart illustrating an auxiliary electronic device operating method relating to communication service setting according to an embodiment of the present disclosure.

Referring to Fig. 8, in relation to the auxiliary electronic device operating method relating to communication service setting, the auxiliary control unit 260 may perform a function standby or function operation in operation 801. For example, the auxiliary control unit 260 may perform a time displaying function, a text writing function, and a music playing function.

In operation 803, for example, when a specific event occurs, the auxiliary control unit 260 may confirm whether a corresponding event relates to an indirect mode request. In this operation, the auxiliary control unit 260 may perform a function corresponding to the corresponding event if the corresponding event does not relate to the indirect mode request. For example, the auxiliary control unit 260 may control volume adjustment during music playback in correspondence to an event type.

When an event corresponding to an indirect mode request occurs in operation 803, the auxiliary control unit 260 may request the main electronic device 100 of indirect mode execution through the service supporting device 300 in operation 807. For example, the auxiliary control unit 260 may generate an indirect mode execution request message, and transmit the generated message to the service supporting device 300 through the second network communication module 280 and the second communication network 500. Here, the auxiliary control unit 260 may transmit the generated message together with identification information of the main electronic device 100. Or, when the service supporting device 300 manages identification information of the main electronic device 100 and the auxiliary electronic device 200, the additional identification information transmission of the main electronic device 100 may be omitted. According to an embodiment, when the main electronic device 100 transmits a response signal in correspondence to the reception of an indirect mode execution request from the auxiliary electronic device 200, the auxiliary electronic device 200 may receive a response signal transmitted from the main electronic device 100. In correspondence to the setting, the auxiliary electronic device 200 may output at least one of pop-up window, audio notification sound, and notification vibration corresponding to the response signal reception. Also, the auxiliary electronic device 200 may output an icon or indicator indicating an indirect mode execution state on the auxiliary display unit 240.

In operation 809, the auxiliary control unit 260 may confirm whether an event corresponding to function termination occurs. When the event corresponding to function termination occurs, the auxiliary control unit 260 may control the function termination of the auxiliary electronic device 200. When the event corresponding to function termination does not occur, the method proceeds to operation 805 to control a function corresponding to an input event. Herein, the auxiliary control unit 260 may control a user function performance of the auxiliary electronic device 200 corresponding to a user input while maintaining an indirect mode execution state.

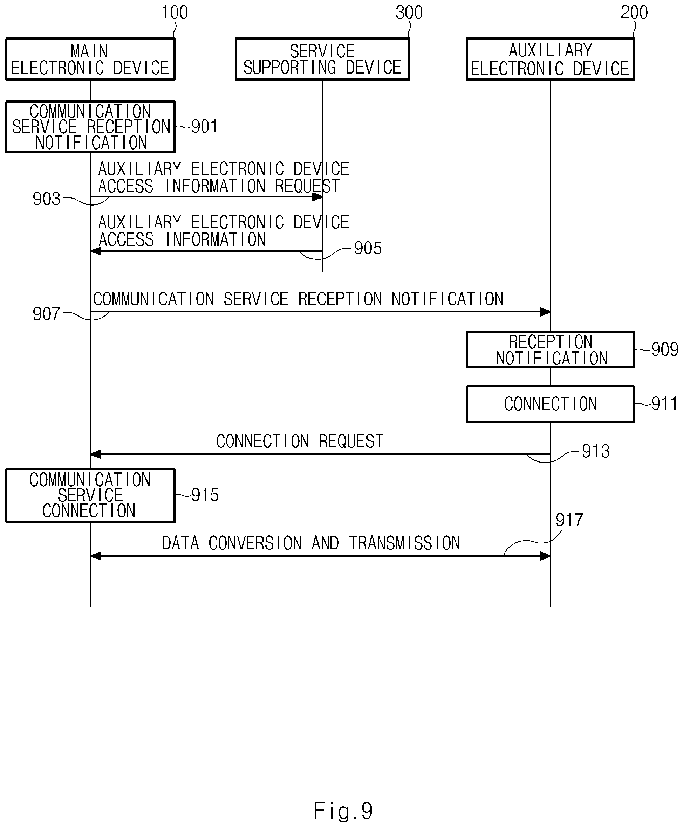

Fig. 9 is a view illustrating a communication service operating method relating to communication service delivery according to an embodiment of the present disclosure. Prior to description, the main electronic device 100 in the communication service operating system 10 may maintain an indirect mode execution state in response to a user request or an indirect mode execution request of the auxiliary electronic device 200. In this process, the main electronic device 100 may have a standby state on the first communication network 400.

Referring to Fig. 9, in relation to the communication service operating method relating to communication service delivery, the main electronic device 100 may perform communication service reception in operation 901. For example, the main electronic device 100 may receive a communication service connection message from the other electronic device 101 connected to the first communication network 400. In operation 903, the main electronic device 100 may request the service supporting device 300 of access information on the auxiliary electronic device 200. Herein, the main electronic device 100 may activate the first network communication module 180 to access the service supporting device 300 through the second communication network 500. Or, the main electronic device 100 may maintain its access state with respect to the service supporting device 300 during indirect mode execution.

In operation 905, the service supporting device 300 may deliver access information on the auxiliary electronic device 200 to the main electronic device 100 in response to a request of the main electronic device 100. The main electronic device 100 may establish a network communication channel with the auxiliary electronic device 200 by using the access information on the auxiliary electronic device 200 provided from the service supporting device 300. In operation 907, the main electronic device 100 may notify the auxiliary electronic device 200 of communication service reception through the established network communication channel. In this process, the main electronic device 100 may transmit a communication service connection message to the auxiliary electronic device 200.

In operation 909, the auxiliary electronic device 200 may perform reception notification in correspondence to communication service reception notification from the main electronic device 100. For example, the auxiliary electronic device 200 may output a pop-up window, audio notification sound, or vibration of a predetermined pattern, all of which indicate that communication service reception occurs. Or, the auxiliary electronic device 200 may perform a predefined certain pattern of lamp blinks. In operation 911, the auxiliary electronic device 200 may receive an event permitting communication service connection from the auxiliary input 220 or the auxiliary display unit 240 having an input function. Herein, the auxiliary electronic device 200 may output a pop-up window or menu item confirming whether communication service connection is permitted. When an item corresponding to connection permission is selected, the auxiliary electronic device 200 may determine the selected item as connection permission event reception.

In operation 913, the auxiliary electronic device 200 may transmit a message requesting communication service connection of the other electronic device 101 or a connection permission message to the main electronic device 100. In operation 915, the main electronic device 100 may transmit a message relating to communication service connection permission to the other electronic device 101 through the first communication network 400. The main electronic device 100 may establish a communication channel, for example, a voice call channel and a video call channel, with the other electronic device 101 through the first communication network 400.

In operation 917, the main electronic device 100 may transmit communication service data transmitted from the other electronic device 101 to the auxiliary electronic device 200. The auxiliary electronic device 200 may deliver data collected by the auxiliary audio processing unit 230 to the main electronic device 100. In operation 917, the main electronic device 100 may convert data that the other electronic device 101 provides through the first communication network 400 into data of a format applicable to the second communication network 500 and may then deliver the converted data to the auxiliary electronic device 200 through the second communication network 500. The main electronic device 100 may convert data that the auxiliary electronic device 200 provides through the second communication network 500 into data of a format applicable to the first communication network 400 and may then deliver the converted data to the other electronic device 101 through the first communication network 400. According to an embodiment, the main electronic device 100 may perform one of converting data written in a mobile communication network format into data in an internet network format and converting data written in an internet network format into data in a mobile communication network format.

Moreover, although the main electronic device 100 and the auxiliary electronic device 200 performing communication service reception notification and connection request and also data conversion and transmission through a network communication channel established based on a network communication module are described above, various embodiments of the present disclosure are not limited thereto. For example, the main electronic device 100 and the auxiliary electronic device 200 may perform message and data delivery through the service supporting device 300. According to an embodiment, the main electronic device 100 may transmit communication service reception notification to the auxiliary electronic device 200 through the service supporting device 300. The auxiliary electronic device 200 may transmit a connection request message to the main electronic device 100 through the service supporting device 300. The main electronic device 100 may transmit communication service data that the other electronic device 101 transmits to the auxiliary electronic device 200 through the service supporting device 300, and the auxiliary electronic device 200 may transmit communication service data to the main electronic device 100 through the service supporting device 300.

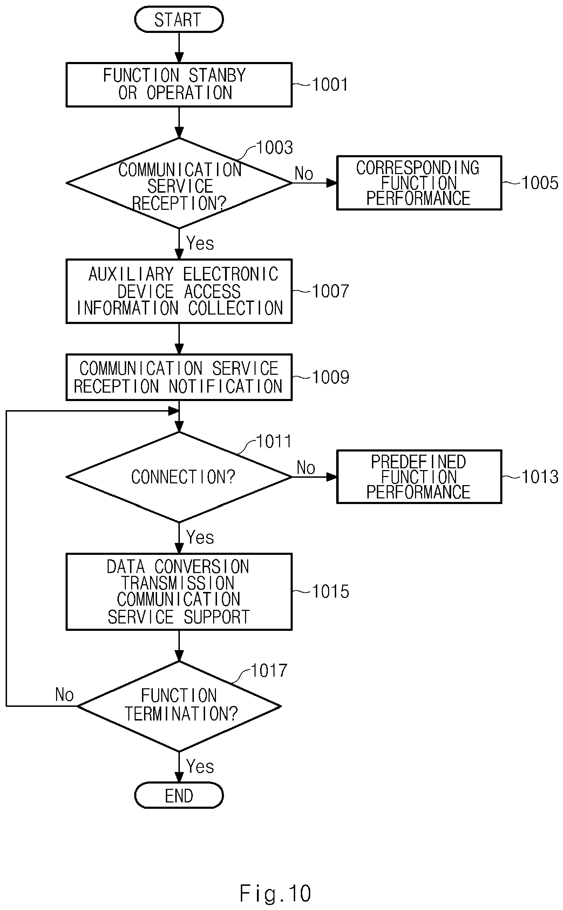

Fig. 10 is a flowchart illustrating a main electronic device operating method relating to communication service delivery according to an embodiment of the present disclosure.

Referring to Fig. 10, in relation to the main electronic device operating method relating to communication service setting, the main control unit 160 may perform a function standby or function operation in operation 1001. For example, the main control unit 160 may operate a sleep state in which the main display unit 140 is in a turn-off state and the communication module 110 is in a standby state. In operation 1003, when a specific event occurs, the main control unit 160 may confirm whether an occurred event is an event relating to communication service reception. When the occurred event is not an event relating to communication service reception, the main control unit 160 may control function performance corresponding to a corresponding event in operation 1005. For example, the main control unit 160 may maintain a sleep state, such as a previous state.

When an event relating to communication service reception occurs in operation 1003, the main control unit 160 may control access information collection of the auxiliary electronic device 200 in operation 1007. In this process, the main control unit 160 may activate the first network communication module 180 to access the service supporting device 300 through the second communication network 500. The main control unit 160 may provide user authentication information during an access process, and may request the service supporting device 300 of current access information on the auxiliary electronic device 200, whose identification information is registered together As collecting the access information on the auxiliary electronic device 200, the main control unit 160 may establish a network communication channel with the auxiliary electronic device 200 through the second communication network 500 on the basis of the collected access information.

In operation 1009, the main control unit 160 may deliver communication service reception notification corresponding to communication service reception from the other electronic device 101 to the auxiliary electronic device 200. Herein, the main control unit 160 may forward a communication service connection message of the other electronic device 101 to the auxiliary electronic device 200 or may transmit an additional message notifying communication service connection message reception from the other electronic device 101 to the auxiliary electronic device 200.

In operation 1011, the main control unit 160 may confirm whether a message permitting communication service connection is received from the auxiliary electronic device 200. In this process, on receiving a message corresponding to connection refusal or connection cancellation from the auxiliary electronic device 200, the main control unit 160 may perform a predefined function in operation 1013. According to an embodiment, the main control unit 160 may transmit a message corresponding to connection refusal to the other electronic device 101 through the first communication network 400. The main control unit 160 may deliver processing notification on message transmission corresponding to connection refusal to the auxiliary electronic device 200. The main control unit 160 may perform message output corresponding to connection refusal performance through at least one of the main display unit 140 and the main audio processing unit 130. Herein, the main control unit 160 may perform the connection refusal processing operation through background processing. In correspondence to this, the main electronic device 100 may maintain a sleep state, such as a turn-off state of the main display unit 140.

On receiving a connection permission message from the auxiliary electronic device 200 in operation 1011, the main control unit 160 may perform communication service support based on data conversion and transmission in operation 1015. For example, the main control unit 160 may transmit a message permitting communication service connection to the other electronic device 101 to establish a communication channel with the other electronic device 101. After converting data transmitted from the other electronic device 101 into data of a format applicable to the second communication network 500 or data of a format applicable to the first network communication module 180, the main control unit 160 may transmit the converted data to the auxiliary electronic device 200. After converting data transmitted from the auxiliary electronic device 200 into data of a format applicable to the first communication network 400, or data of a format applicable to the communication module 110, the main control unit 160 may transmit the converted data to the other electronic device 101.

In operation 1017, the main control unit 160 may confirm whether an event corresponding to function termination occurs. When the event corresponding to function termination occurs, the main control unit 160 may control the function termination of the main electronic device 100. When the event corresponding to function termination does not occur, the method returns to operation 1011 to perform the subsequent operations again.

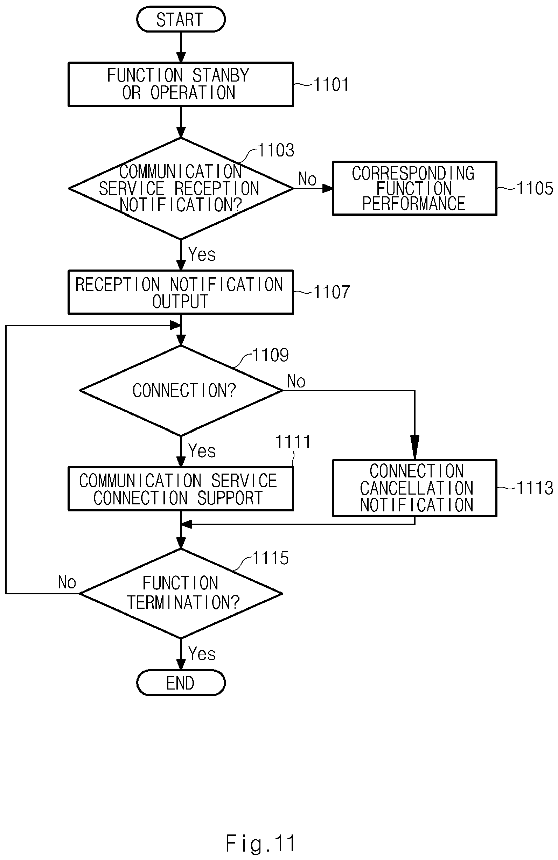

Fig. 11 is a flowchart illustrating an auxiliary electronic device operating method relating to communication service delivery according to an embodiment of the present disclosure.

Referring to Fig. 11, in relation to the auxiliary electronic device operating method relating to communication service delivery, the auxiliary control unit 260 may control a function standby or function operation in operation 1101. For example, the auxiliary control unit 260 may control various function performances supported by the auxiliary electronic device 200, for example, a music playing function, a picture capturing function, a text writing function, and a time displaying function. In operation 1103, the auxiliary control unit 260 may confirm whether communication service reception notification is received. In this process, if there is no communication service reception notification, the auxiliary control unit 260 may control function performance corresponding to corresponding event occurrence in operation 1105. For example, the auxiliary control unit 260 may perform music playing function maintenance corresponding to an event type. The communication service reception notification may be received from the service supporting device 300 or the main electronic device 100. In relation to the reception from the main electronic device, a network communication channel establishment based on the second communication network 500 with the main electronic device 100 may be maintained.

In operation 1103, once communication service reception notification occurs, the auxiliary control unit 260 may output reception notification in operation 1107. The auxiliary control unit 260 may output to the auxiliary display unit 240 a pop-up window notifying that communication service is received or generate vibration of a pattern corresponding thereto. Or, the auxiliary control unit 260 may output audio data or control lamp blinks, which notify communication service reception. The auxiliary control unit 260 may output a pop-up window asking about whether to permit communication service connection.

When an input event relating to communication service connection occurs in operation 1109, the auxiliary control unit 260 proceeds to operation 1111 to perform communication service connection support. Once the input event relating to communication service connection occurs, the auxiliary control unit 260 may transmit a connection request message or a connection permission message to the main electronic device 100. The auxiliary control unit 260 may establish a network communication channel based on the second communication network 500 with the main electronic device 100. The auxiliary control unit 260 may transmit/receive to/from the main electronic device 100 data relating to a communication service operation with the other electronic device 101, through a network communication channel.

If an input event for not permitting connection, for example, an input event corresponding to connection refusal, occurs in operation 1109, the auxiliary control unit 260 may perform connection cancellation notification in operation 1113. The auxiliary control unit 260 may deliver a message corresponding to connection cancellation or connection refusal to the main electronic device 100.

In operation 1115, the auxiliary control unit 260 may confirm whether an event relating to function termination occurs. The auxiliary control unit 260 may control the function termination of the auxiliary electronic device 200 when a function termination event occurs. If there is no function termination event occurrence and communication service reception occurs additionally, the auxiliary control unit 260 returns to operation 1109 to perform the subsequent operations again. Or, if there is no function termination event occurrence, the auxiliary control unit 260 returns to operation 1103 to perform the subsequent operations again.

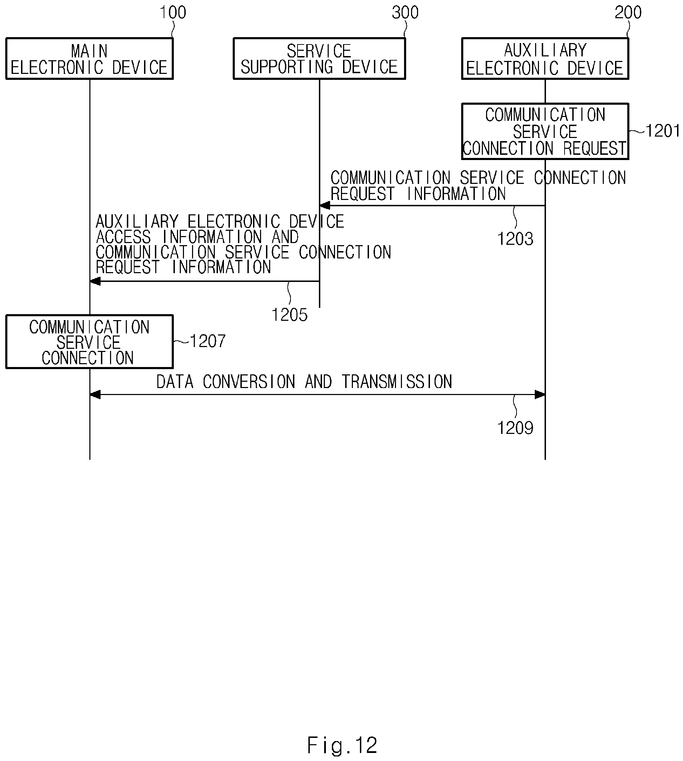

Fig. 12 is a view illustrating a communication service operating method relating to communication service requesting according to an embodiment of the present disclosure.

Referring to Fig. 12, in relation to the communication service operating method relating to communication service requesting, the auxiliary electronic device 200 may receive a communication service connection request in operation 1201. In the process, the auxiliary electronic device 200 may output a screen interface relating to the communication service connection request. For example, the auxiliary electronic device 200 may output at least one of a phone book list output screen, a dial screen, and a call history screen. Once a specific phone number input and a call making input occur, the auxiliary electronic device 200 may recognize a corresponding input as service connection request occurrence.

In operation 1203, the auxiliary electronic device 200 may transmit communication service connection request information to the service supporting device 300. For example, the auxiliary electronic device 200 may transmit a communication service connection request message and access information on the second communication network 500 of the auxiliary electronic device 200 to the service supporting device 300. The communication service connection request message may include phone number information and call making request information of the other electronic device 101. The service supporting device 300 may confirm the identification information of the main electronic device 100 registered together with the auxiliary electronic device 200 by confirming the identification information of the auxiliary electronic device 200. The service supporting device 300 may confirm information on access to the second communication network 500 of the main electronic device 100.

In operation 1205, the service supporting device 300 may transmit access information and communication service connection request information of the auxiliary electronic device 200 to the main electronic device 100. The service supporting device 300 may perform network communication channel establishment with the main electronic device 100 through the second communication network 500. According to various embodiments, the service supporting device 300 may transmit communication service connection request information except the access information on the auxiliary electronic device 200 through the network communication channel.

In operation 1207, the main electronic device 100 may perform communication service connection. The main electronic device 100 may transmit a communication service connection request message to the other electronic device 101 on the basis of phone number information of the other electronic device 101 in the communication service connection request message transmitted from the service supporting device 300. When the other electronic device 101 permits communication service connection, the main electronic device 100 may establish a communication channel based on the first communication network 400 with the other electronic device 101.

In operation 1029, the main electronic device 100 may establish a network communication channel based on the second communication network 500 with the auxiliary electronic device 200, and may perform data conversion and transmission. According to an embodiment, the main electronic device 100 may establish a network communication channel with the auxiliary electronic device 200 by using the access information on the auxiliary electronic device 200 received together while the communication service connection request information is received. In order for communication service relay of the other electronic device 101, the main electronic device 100 may convert data received through the first communication network 400 into data of a format applicable to the second communication network 500 and convert data received through the second communication network 500 into data of a format applicable to the first communication network 400 and may then deliver the converted data. According to another embodiment, if the main electronic device 100 does not receive access information on the auxiliary electronic device 200 in operation 1205, the service supporting device 300 may request the access information on the auxiliary electronic device 200 between operation 1207 and operation 1209. Then, the main electronic device 100 may establish a network communication channel with the auxiliary electronic device 200 on the basis of the collected access information on the auxiliary electronic device 200.

According to various embodiments, the main electronic device 100 may fail in communication service connection with the other electronic device 101. When communication service connection fails, the main electronic device 100 may notify communication service connection failure to the auxiliary electronic device 200. In this process, the main electronic device 100 may transmit a connection failure message after establishing a network communication channel with the auxiliary electronic device 200, or may transmit a connection failure message to the auxiliary electronic device 200 through the service supporting device 300.

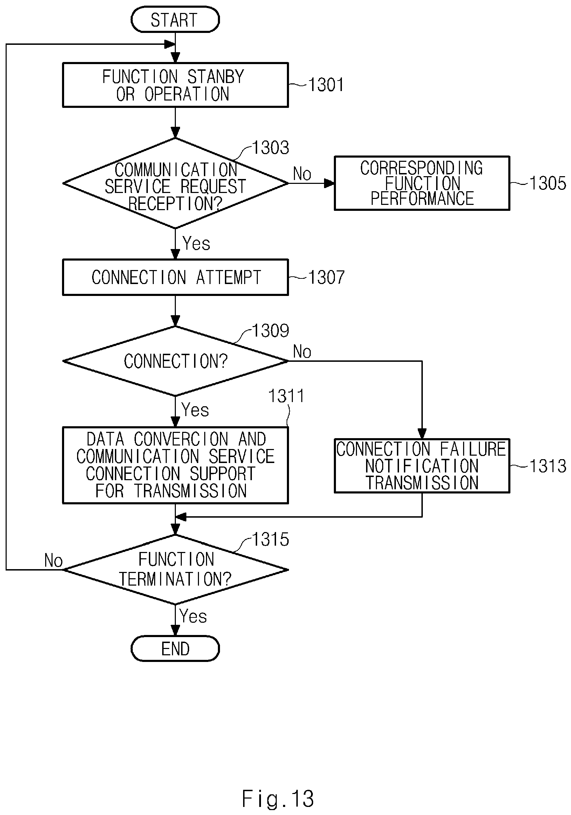

Fig. 13 is a flowchart illustrating a main electronic device operating method relating to communication service requesting according to an embodiment of the present disclosure.

Referring to Fig. 13, in relation to the main electronic device operating method relating to communication service request, the main control unit 160 may control a function standby or function operation in operation 1301. For example, the main control unit 160 may maintain a sleep state. In operation 1303, the main control unit 160 may confirm whether a communication service connection request is received. In this process, if the communication service connection request does not occur, the main control unit 160 may perform a function according to an occurred event or may maintain a previous state in operation 1305. The main control unit 160 may activate the first network communication module 180 and maintain its access state with the second communication network 500 in relation to the communication service connection request reception.

On receiving a communication service connection request from the auxiliary electronic device 200 in operation 1330, the main control unit 160 may perform connection attempt in operation 1307. The main control unit 160 may collect the phone number of the other electronic device 101 during a communication service connection request reception process, and make a call to the other electronic device 101 on the basis of the collected phone number.

In operation 1309, the main control unit 160 may confirm whether communication service connection with the other electronic device 101 is performed. In this process, when the communication service connection is performed, the main control unit 160 may perform communication service connection support through data conversion and transmission in operation 1311. For example, the main control unit 160 may establish a network communication channel based on the second communication network 500 with the auxiliary electronic device 200, and may perform communication service relay with the other electronic device 101. In this process, the main control unit 160 may perform data conversion for data delivery between the first communication network 400 and the second communication network 500.

When the communication service connection fails in operation 1309, that is, connection is not performed according to a variety of situations (such as when the other electronic device 101 refuses connection or does not permit connection within a predetermined time), the main control unit 160 may transmit connection failure notification in operation 1313. For example, the main control unit 160 may generate a message notifying the connection failure and transmit the generated connection failure message to the auxiliary electronic device 200. In this process, the main control unit 160 may temporarily establish a network communication channel with the auxiliary electronic device 200 in relation to the connection failure message transmission. According to another embodiment, the main control unit 160 may deliver a connection failure message to the service supporting device 300, and the service supporting device 300 may deliver the connection failure message to the auxiliary electronic device 200.

In operation 1315, the main control unit 160 may confirm whether an event relating to function termination occurs. When the event relating to the function termination occurs, the main control unit 160 may control the function termination of the auxiliary electronic device 200. When the event relating to function termination does not occur, the main control unit 160 returns to operation 1301 to perform the subsequent operations again.

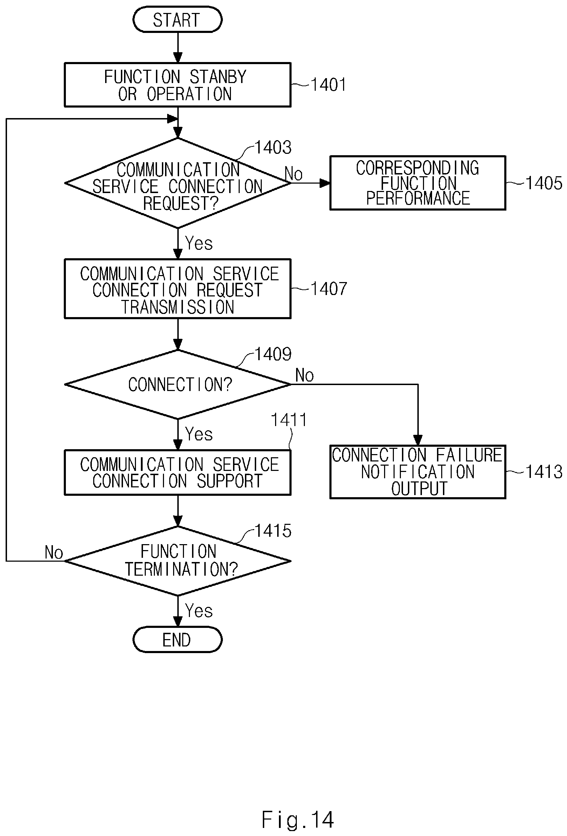

Fig. 14 is a flowchart illustrating an auxiliary electronic device operating method relating to communication service requesting according to an embodiment of the present disclosure.

Referring to Fig. 14, in relation to the auxiliary electronic device operating method relating to communication service requesting, the auxiliary control unit 260 may perform a function operation or function standby in operation 1401. According to an embodiment, the auxiliary control unit 260 may perform a time displaying function. According to another embodiment, the auxiliary control unit 260 may perform a music playing function.

In operation 1403, the auxiliary control unit 260 may confirm whether an input event on a communication service connection request occurs. If an input event on a communication service connection request does not occur from at least one of the auxiliary input unit 220 and the auxiliary display unit 240 having an input function, the auxiliary control unit 260 may control a function performance corresponding to an occurring event in operation 1405.

If the input event on a communication service connection request occurs in operation 1403, the auxiliary control unit 260 may transmit a communication service connection request in operation 1407. According to an embodiment, the auxiliary control unit 260 may transmit to the main electronic device 100 the connection request message including phone number information and call making information of the other electronic device 101 corresponding to the communication service connection request. In this process, the auxiliary control unit 260 may transmit the connection request message to the service supporting device 300, so that the service supporting device 300 may deliver the connection request message to the main electronic device 100. According to another embodiment, the auxiliary control unit 260 may request access information on the main electronic device 100 from the service supporting device 300, and may establish a network communication channel based on the second communication network 500 with the main electronic device 100 on the basis of the access information on the main electronic device 100. Once the network communication channel is established, the auxiliary control unit 260 may transmit a connection request message to the main electronic device 100.

In operation 1409, the auxiliary control unit 260 may confirm whether a message about service connection success is received from the main electronic device 100. Once communication service connection is successful, the auxiliary control unit 260 may support the communication service connection in operation 1411. For example, the auxiliary control unit 260 may establish a network communication channel with the main electronic device 100 in response to a request of the main electronic device 100. The auxiliary control unit 260 may output data of the other electronic device 101 delivered through the network communication channel. The auxiliary control unit 260 may deliver audio data received from the auxiliary audio processing unit 230 to the main electronic device 100 through a network communication channel. When video call service is in progress, the auxiliary electronic device 260 may activate a camera module to collect an image. The auxiliary control unit 260 may deliver the collected image information to the main electronic device 100 through a network communication channel, and receive image information that the other electronic device 101 transmits from the main electronic device 100 and output the received information.

If the communication service connection fails in operation 1409, the auxiliary control unit 260 may output connection failure notification in operation 1413. If the communication service connection fails, the auxiliary control unit 260 may receive a message notifying connection failure from the main electronic device 100. The auxiliary control unit 260 may output a pop-up window corresponding to the received connection failure message or output audio data corresponding thereto.

In operation 1415, the auxiliary control unit 260 may confirm function termination related event occurrence. The auxiliary control unit 260 may control the function termination of the auxiliary electronic device 200 when a function termination event occurs. If there is no function termination related event, the auxiliary control unit 260 returns to operation 1403 to perform the subsequent operations again.

As mentioned above, according to various embodiments of the present disclosure, the communication service operating method may include receiving, by the auxiliary electronic device 200, an indirect mode execution request event using communication service data of the main electronic device 100 connected to the first communication network 400, confirming, by the auxiliary electronic device 200, whether the second communication network 500 is accessible, and transmitting, by the auxiliary electronic device 200, an indirect mode execution request message to the main electronic device 100 on the basis of the second communication network 500.

According to various embodiments, the method may further include a data output process for receiving and outputting, by the auxiliary electronic device 200, at least some of unconfirmed communication service data among data that the main electronic device 100 receives through the first communication network 400.

According to various embodiments, the data output process may further include a process for transmitting, by the main electronic device 100, the unconfirmed communication data to the service supporting device 300 connected to the second communication network 500 and a process for transmitting, by the service supporting device 300, the unconfirmed communication data to the auxiliary electronic device 200 through the second communication network 500.

According to various embodiments, the method may further include receiving and outputting, by the auxiliary electronic device 200, a communication service connection message that the main electronic device 100 receives through the first communication network 400, through the second communication network 500 and transmitting whether the auxiliary electronic device 200 is permitted for communication service connection to the main electronic device 100.

According to various embodiments, the method may further include collecting information on access to the second communication network 500 of the auxiliary electronic device 200 and establishing, by the main electronic device 100, a network communication channel based on the second communication network 500 with the auxiliary electronic device 200 by using the access information.

According to various embodiments, the method may further include transmitting, by the auxiliary electronic device 200, a communication service connection request message based on the first communication network 400 to the main electronic device 100 through the second communication network 500.

According to various embodiments, the method may further include attempting, by the main electronic device 100, communication service connection with the other electronic device 101 on the basis of information written in the communication service connection request message and transmitting, by the main electronic device 100, the communication service connection result to the auxiliary electronic device 200.

According to various embodiments, the method may further include at least one of outputting a message notifying the short range communication channel release or establishment between the auxiliary electronic device 200 and the main electronic device 100 and a message notifying the indirect mode switching, outputting a notification that the second communication network 500 is inaccessible during the indirect mode switching, outputting a widget relating to the indirect mode execution or release setting, and outputting at least one of a dial screen where a phone number and text input is possible, an information displaying screen displaying a stored phone book or a phone book provided by the main electronic device 100, and a call list screen including at least some of call lists provided by the main electronic device 100 and stored call lists.

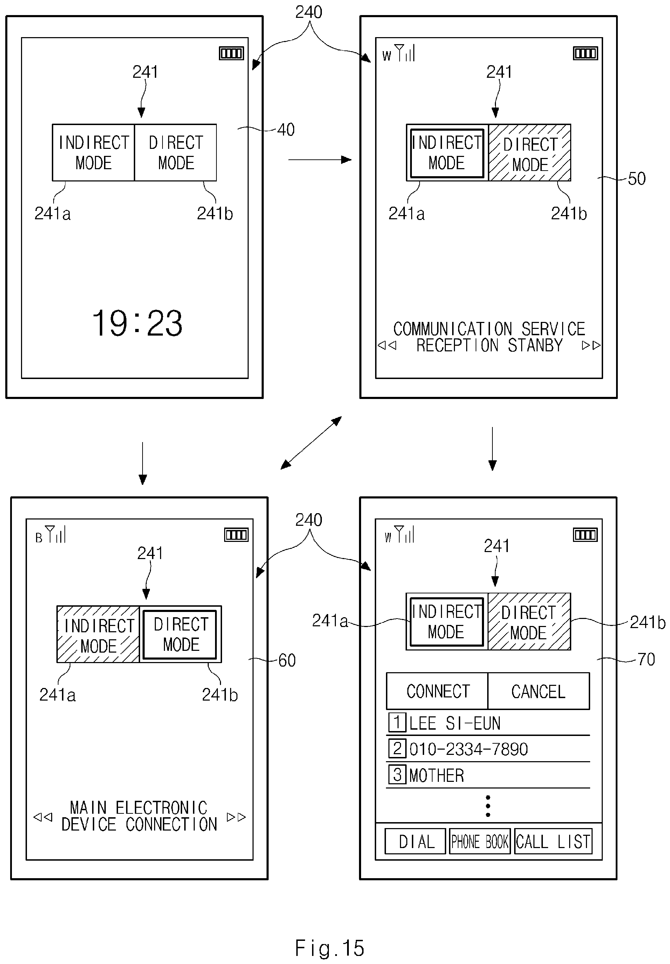

Fig. 15 is a view illustrating a screen interface applicable to communication service operation according to an embodiment of the present disclosure. In the following description, a screen interface displayed on an auxiliary display unit of an auxiliary electronic device is exemplarily described. However, various embodiments of the present disclosure are not limited to the above. For example, a screen interface described below may be outputted to at least one of a main electronic device and an auxiliary electronic device. Additionally, the screen interface is exemplified with a widget including an indirect mode area relating to an indirect mode execution and release request and a direct mode area relating to a direct mode execution and release request, but various embodiments of the present disclosure are not limited thereto. For example, the auxiliary display unit 240 may provide a widget including only an indirect mode area and a widget including only a direct mode area separately. Moreover, a widget described below may be provided in an icon form.

Referring to Fig. 15, the auxiliary display unit 240 may output a standby screen 40. The standby screen 40 may support a time displaying function. According to an embodiment, the auxiliary display unit 240 may display a mode selection widget 241 for selecting an indirect mode or a direct mode. Herein, as mentioned above, the direct mode may be a mode establishing a short range direct communication channel based on a short range communication module between the main electronic device 100 and the auxiliary electronic device 200, and transmitting/receiving data on the basis of the established short range direct communication channel. For example, the direct mode may be a mode based on communication channel establishment of short range communication modules without using a separate communication network. The indirect mode may be a mode transmitting/receiving data by the main electronic device 100 and the auxiliary electronic device 200 through a specific communication network. Herein, the communication network may be an internet based network. In the indirect mode, the auxiliary electronic device 200 and the main electronic device 100 may communicate with each other in a place where internet network access is available regardless of a distance or specific arrangement state. The mode selection widget 241 includes an indirect mode area 241a and a direct mode area 241b. The indirect mode area 241a may be an area for requesting indirect mode execution. The direct mode area 241b may be an area for requesting direct mode execution.

At the request of indirect mode execution, the auxiliary display unit 240 may provide an image change of the mode selection widget 241 as shown in the indirect mode standby screen 50. For example, the auxiliary display unit 240 may change at least one of color, brightness, and form to distinguish the indirect mode area 241a and the direct mode area 241b from each other. In relation to an indirect mode execution request, when an area selection occurs, for example, a touch on the indirect mode area 241a in the mode selection widget 241, the auxiliary electronic device 200 may recognize it as an indirect mode execution request. Or, when a predefined specific key button for indirect mode execution is pressed, the auxiliary electronic device 200 may recognize it as an indirect mode execution request. Or, when a phone number is selected from at least one of a phone book list screen, a dial screen, or a call history screen, and making a call is requested, the auxiliary electronic device 200 may automatically recognize it as an indirect mode execution request.

According to indirect mode execution, the auxiliary electronic device 200 may access the second communication network 500. In correspondence to this, the indirect mode standby screen 50 may display a network communication state indicator indicating a communication state of the second communication network 500 at a predetermined position of a screen of the auxiliary display unit 240. Additionally, the indirect mode standby screen 50 may display specific text information indicating a current service state, for example, text information corresponding to a communication service reception standby. The indirect mode standby screen 50 may display image information replacing the specific text information separately or together with text information.

At the request of direct mode execution, the auxiliary display unit 240 may provide an image change of the mode selection widget 241 as shown in a direct mode screen 60. For example, the auxiliary display unit 240 may display the direct mode area 241b corresponding to a currently executed direct mode brighter compared to the indirect mode area 241a. Here, an image change of the mode selection widget 241 is not limited to the above brightness change. For example, an image change of the mode selection widget 241 may include at least one of a color change and a form change in correspondence to a mode in execution.

According to an embodiment, if the direct mode area 241b is selected, the auxiliary electronic device 200 may perform a direct mode. For example, the auxiliary electronic device 200 may scan the first short range communication module 170 of the main electronic device 100 by activating the second short range communication module 270. The auxiliary electronic device 200 may establish a short range communication channel with the first short range communication module 170 of the main electronic device 100. The auxiliary electronic device 200 may transmit/receive communication service data through the short range communication channel. The direct mode screen 60 may display a short range communication state indicator indicating a communication state of the short range communication channel, on a status bar area or at a predetermined position of the auxiliary display unit 240.

According to event occurrence in the indirect mode standby screen 50, the auxiliary display unit 240 may display a communication service connection request screen 70. The auxiliary electronic device 200 may provide a menu item, icon or specific hot key in relation to a communication service connection request. When an event relating to communication service connection request, for example, a phone book list output request, occurs, the auxiliary electronic device 200 may output a communication service connection request screen 70 as shown in the drawing. The auxiliary electronic device 200 may provide a phone list stored in the auxiliary storage unit 250 or request a phone book list from the main electronic device 100 and then output the requested phone book list. According to various embodiments, once a dial item is selected, the auxiliary display unit 240 may display a dial screen where a number and text input is available. Once a call list item is selected, the auxiliary display unit 240 may display a screen including a previous call list. While a call list is outputted, the auxiliary electronic device 200 may output a call history stored in the auxiliary storage unit 250 or may request a call history from the main electronic device 100 and output the requested call history. In this process, the auxiliary electronic device 200 may receive a history of calls transmitted/received in a predetermined period, for example, a week or a month, from the main electronic device 100 and then output the received call history. Or, the auxiliary electronic device 200 may output a history of calls transmitted/received through the auxiliary electronic device 200 and a history of calls transmitted/received through the main electronic device 100 distinguishably. Once a specific phone number item is selected from the communication service connection request screen 70 or a connection item is selected while a specific phone number item is designated, the auxiliary electronic device 200 may transmit a communication service connection request message to the main electronic device 100.

As mentioned above, in relation to a communication service operating method and an electronic device supporting the same according to various embodiments of the present disclosure, even when the auxiliary electronic device 200 is spaced more than a predetermined distance from the main electronic device 100, a communication service operation based on the main electronic device 100 is available. Furthermore, according to various embodiments of the present disclosure, under an environment where the auxiliary electronic device 200 is provided in a wearable form, regardless of a relative position to the main electronic device 100, a function operation of the main electronic device 100 may be performed easily by using the auxiliary electronic device 200. In addition, according to various embodiments of the present disclosure, by maximizing the utilization of the auxiliary electronic device 200, information reading and confirmation and function controls may be easily and adaptively performed.

Alternatively, although modifications vary in accordance with the convergence trend of digital devices and thus may not be all listed, the main electronic device 100 and the auxiliary electronic device 200 may further include components not mentioned above, for example, an acceleration sensor, a gyro sensor, a GPS module, a Near Field Communication (NFC) module, a vibration motor, and accessories. Furthermore, the main electronic device 100 and the auxiliary electronic device 200 may exclude specific components from the above components or replace them with other components according to a form provided.

Although the present disclosure has been described with an exemplary embodiment, various changes and modifications may be suggested to one skilled in the art. It is intended that the present disclosure encompass such changes and modifications as fall within the scope of the appended claims.

## Claims

1. A main electronic device (100) comprising:
a communication module (100) configured to establish a communication channel using a first communication network (400);
a first network communication module (180) configured to establish a network communication channel using a second communication network (500);
a first short range communication module (170) configured to establish a short range communication channel; and
a main control unit (160) configured to control a direct mode execution and an indirect mode execution, wherein in the direct mode execution data received through the communication module is transmitted to an auxiliary device (200) through the short range communication channel and in the indirect mode execution the data received through the communication module is transmitted to the auxiliary electronic device (200) either
- through the second communication network (500) using connection data received from a service supporting device (300) connected to the second communication network, or
- through the first network communication module (180) via the service supporting device (300),
wherein the main control unit (160) is configured to control the indirect mode execution when a release event of the short range communication channel occurs during a direct mode execution using the short range communication channel with the auxiliary electronic device (200).

2. The main electronic device (100) according to claim 1, wherein the main control unit (160) is configured to transmit to the auxiliary electronic device at least some unconfirmed communication service data, said data comprising one of missed call information or message information, among data received through the communication module.

3. The main electronic device (100) according to claim 2, wherein the main control unit (160) is configured to transmit the at least some unconfirmed communication data to a service supporting device (300) connected to the first network communication module (180) in real time or configured to transmit the at least some unconfirmed communication data to the service supporting device when the indirect mode execution of the auxiliary electronic device is requested, or
wherein the main control unit is configured to establish the network communication channel using the first network communication module with the auxiliary electronic device (200) and is configured to transmit the unconfirmed communication service data to the auxiliary electronic device through the network communication channel.

4. The main electronic device (100) according to any one of the preceding claims, wherein the main control unit (160) is further configured to stop the indirect mode execution and to control the direct mode execution using the short range communication channel with the auxiliary electronic device when an event requesting an establishment of the short range communication channel occurs during the indirect mode execution.

5. An auxiliary electronic device (200) comprising:
a second short range communication module (270) configured for communication with a main electronic device (100) in a direct mode execution through a short range communication channel, the second short range communication module (270) further configured to establish the short range communication channel and receive data from the main electronic device (100) in the direct mode execution through the short range communication channel;
an auxiliary control unit (260) configured to transmit an indirect mode execution request message requesting to a main electronic device (100) through a second communication network (500), communication service data transmitted and/or received by the main electronic device (100) through a first communication network (400); and
a second network communication module (280) configured to establish a network communication channel using the second communication network (500), the second network communication module (280) further configured to receive data from the main electronic device in the indirect mode execution either
- through the second communication network (500) using connection data received from a service supporting device (300) connected to the second communication network (500), or
- through a first network communication module (180) of the main electronic device (100) via the service supporting device (300),
wherein the auxiliary control unit (260) is further configured to control the indirect mode execution when a release event of the short range communication channel occurs during a direct mode execution using the short range communication channel with the main electronic device (100).

6. The auxiliary electronic device (200) according to claim 5, wherein the auxiliary control unit (260) is configured to establish a network communication channel with the main electronic device (100), and receive at least some unconfirmed communication service data among data that the main electronic device receives through a communication module (110) via the network communication channel established by the auxiliary control unit, or is configured to establish a network communication channel with a service supporting device (300), and receive at least some unconfirmed communication service data that the main electronic device receives from the service supporting device, or is configured to establish a network communication channel with a service supporting device and transmit information on access to the second communication network (500) to the service supporting device.

7. The auxiliary electronic device (200) according to claim 5, further comprising an auxiliary display unit (240) configured to output at least one of a message notifying a release or establishment of the short range communication channel, a message notifying indirect mode switching, or a message notifying that the second communication network is inaccessible during the indirect mode switching.

8. The auxiliary electronic device (200) according to any one of the preceding claims 5-7, wherein the auxiliary control unit (260) is further configured to control a direct mode execution based on the short range communication channel with the main electronic device when an indirect mode release event occurs.

9. The auxiliary electronic device (200) according to any one of the claims 5-8, further comprising an auxiliary display unit (240) configured to provide an output to at least one of a widget relating to indirect mode execution or release setting, a dial screen where a phone number and text input is available; an information displaying screen configured to display a stored phone book or a phone book provided from the main electronic device, or a call list screen comprising at least some call lists provided from the main electronic device and at least some stored call lists.

10. A communication service operating method comprising:
establishing, by an auxiliary device (200), a short range communication channel for communication with a main electronic device (100) connected to a first communication network (400);
transmitting and receiving data, by the main electronic device (100) and the auxiliary device (200), in a direct mode execution through the short range communication channel;
receiving, by the auxiliary electronic device (200), an indirect mode execution request event using communication service data of the main electronic device (100) connected to the first communication network (400);
confirming, by the auxiliary electronic device (200), whether a second communication network (500) is accessible;
releasing, by the auxiliary electronic device (200) the short range communication channel connecting the auxiliary electronic device (200) to the main electronic device (100),;
transmitting, by the auxiliary electronic device (200), an indirect mode execution request message to the main electronic device (100) through the second communication network (500),
when an input signal requesting indirect mode release is received, releasing, by the auxiliary electronic device (200), the access state of the second communication network (500),
receiving data, by the auxiliary device (200), from the main electronic device in the indirect mode execution either
- through the second communication network (500) using connection data received from a service supporting device (300) connected to the second communication network, or
- through a first network communication module (180) of the main electronic device (100) via the service supporting device (300).

11. The method according to claim 10, further comprising receiving and outputting, by the auxiliary electronic device (200), at least some unconfirmed communication service data among data that the main electronic device (100) receives through the first communication network (400),
wherein the receiving and outputting of the at least some unconfirmed communication service data further comprises:
transmitting, by the main electronic device, the unconfirmed communication service data to a service supporting device (300) connected to the second communication network (500); and
transmitting, by the service supporting device, the unconfirmed communication service data to the auxiliary electronic device through the second communication network.

12. The method according to claim 10 or 11, further comprising at least one of:
receiving and outputting through the second communication network (500), by the auxiliary electronic device (200), a communication service connection message, wherein the communication service connection message is received by the main electronic device (100) through the first communication network (400) and transmitting a determination on whether the auxiliary electronic device permits communication service connection to the main electronic device; or
collecting, by the main electronic device, information concerning access to the second communication network of the auxiliary electronic device and establishing, by the main electronic device, a network communication channel based on the second communication network with the auxiliary electronic device, wherein the network communication channel is established using the access information.

13. The method according to any one of the claims 10-12, further comprising at least one of:
transmitting, by the auxiliary electronic device (200), a communication service connection request message to the main electronic device (100) through the second communication network (500);
attempting, by the main electronic device, communication service connection with another electronic device (101) based on information written in the communication service connection request message; and
transmitting, by the main electronic device, a communication service connection result to the auxiliary electronic device.

14. The method according to any one of the claims 10-13, further comprising at least one of:
providing an output of a message providing a notification of indirect mode switching and at least one of a message providing a notification of a short range communication channel release between the auxiliary electronic device (200) and the main electronic device (100) or a message providing a notification of a short range communication channel establishment between the auxiliary electronic device and the main electronic device;
providing an output of a message providing a notification that the second communication network (500) is inaccessible during the indirect mode switching;
providing an output of a widget relating to the indirect mode execution or release setting; or
providing an output on at least one of: a dial screen where a phone number and text input is available, an information displaying screen configured to display a stored phone book or a phone book provided from the main electronic device, or a call list screen comprising at least some call lists provided from the main electronic device and at least some stored call lists.

## Patentansprüche

1. Elektronische Hauptvorrichtung (100) mit:
einem Kommunikationsmodul (100), konfiguriert, um einen Kommunikationskanal unter Verwendung eines ersten Kommunikationsnetzes (400) aufzubauen;
einem ersten Netzkommunikationsmodul (180), konfiguriert, um einen Netzkommunikationskanal unter Verwendung eines zweiten Kommunikationsnetzes (500) aufzubauen;
einem ersten Nahbereichskommunikationsmodul (170), konfiguriert, um einen Nahbereichskommunikationskanal aufzubauen; und
einer Hauptsteuerungseinheit (160), konfiguriert, um eine Direktbetriebsausführung und eine Indirektbetriebsausführung zu steuern, wobei in der Direktbetriebsausführung Daten, die durch das Kommunikationsmodul empfangen werden, zu einer Hilfsvorrichtung (200) durch den Nahbereichskommunikations-Kanal übertragen werden und in der Indirektbetriebsausführung die Daten, die durch das Kommunikationsmodul empfangen werden, an die elektronische Hilfsvorrichtung (200) übertragen werden, entweder
- durch das zweite Kommunikationsnetz (500) unter Verwendung von Verbindungsdaten, die von einer Dienstunterstützungsvorrichtung (300) her empfangen werden, die mit dem zweiten Kommunikationsnetz verbunden sind, oder
- durch das erste Netzkommunikationsmodul (180) über die Dienstunterstützungsvorrichtung (300),
wobei die Hauptsteuerungseinheit (160) konfiguriert ist, um die Indirektbetriebsausführung zu steuern, wenn ein Freigabeereignis des Nahbereichskommunikationskanals eintritt, während einer Direktbetriebsausführung unter Verwendung des Nahbereichskommunikationskanals mit der elektronischen Hilfsvorrichtung (200).

2. Elektronische Hauptvorrichtung (100) nach Anspruch 1, wobei die Hauptsteuerungseinheit (160) konfiguriert ist, um an die elektronische Hilfsvorrichtung mindestens einige unbestätigte Kommunikationsdienstdaten zu übertragen, wobei besagte Daten Informationen über verpasste Anrufe oder Nachrichteninformationen umfassen, unter den Daten, die durch das Kommunikationsmodul empfangen werden.

3. Elektronische Hauptvorrichtung (100) nach Anspruch 2, wobei die Hauptsteuerungseinheit (160) konfiguriert ist, um mindestens einige unbestätigte Kommunikationsdaten an eine Dienstunterstützungsvorrichtung (300) zu übertragen, die mit dem ersten Netzkommunikationsmodul (180) in Echtzeit verbunden oder konfiguriert ist, um mindestens einige unbestätigte Kommunikationsdaten an die Dienstunterstützungsvorrichtung zu übertragen, wenn die Indirektbetriebsausführung von der elektronischen Hilfsvorrichtung beantragt wird, oder
wobei die Hauptsteuerungseinheit konfiguriert ist, um den Netzkommunikationskanal unter Verwendung des ersten Netzkommunikationsmoduls mit der elektronischen Hilfsvorrichtung (200) aufzubauen und konfiguriert ist, um die unbestätigten Kommunikationsdienstdaten an die elektronische Hilfsvorrichtung durch den Netzkommunikationskanal zu übertragen.

4. Elektronische Hauptvorrichtung (100) nach einem beliebigen der vorhergehenden Ansprüche, wobei die Hauptsteuerungseinheit (160) des Weiteren konfiguriert ist, um die Indirektbetriebsausführung zu stoppen und um die Direktbetriebsausführung unter Verwendung des Nahbereichskommunikationskanals mit der elektronischen Hilfsvorrichtung zu steuern, wenn ein Ereignis eintritt, das einen Aufbau des Nahbereichskommunikationskanals während der Indirektbetriebsausführung erfordert.

5. Elektronische Hilfsvorrichtung (200) mit:
einem zweiten Nahbereichskommunikationsmodul (270), konfiguriert zur Kommunikation mit einer elektronischen Hauptvorrichtung (100) in einer Direktbetriebsausführung durch einen Nahbereichskommunikationskanal, wobei das zweite Nahbereichskommunikationsmodul (270) des Weiteren konfiguriert ist, um den Nahbereichskommunikationskanal aufzubauen und Daten von der elektronische Hauptvorrichtung (100) in der Direktbetriebsausführung durch den Nahbereichskommunikationskanal zu empfangen;
einer Hilfssteuerungseinheit (260), die konfiguriert ist, um eine Indirektbetriebsausführungs-Anforderungsnachricht an eine elektronische Hauptvorrichtung (100) durch ein zweites Kommunikationsnetz (500) zu übertragen, die Kommunikationsdienstdaten anfordert, die von der elektronischen Hauptvorrichtung (100) durch ein erstes Kommunikationsnetz (400) übertragen und/oder empfangen werden; und
einem zweiten Netzkommunikationsmodul (280), konfiguriert, um einen Netzkommunikationskanal unter Verwendung des zweiten Kommunikationsnetzes (500) aufzubauen, wobei das zweite Netzkommunikationsmodul (280) des Weiteren konfiguriert ist, um Daten von der elektronische Hauptvorrichtung in der Indirektbetriebsausführung zu empfangen, entweder
- durch das zweite Kommunikationsnetz (500) unter Verwendung von Verbindungsdaten, die von einer Dienstunterstützungsvorrichtung (300) her empfangen werden, die mit dem zweiten Kommunikationsnetz (500) verbunden ist, oder
- durch ein erstes Netzkommunikationsmodul (180) der elektronischen Hauptvorrichtung (100) über die Dienstunterstützungsvorrichtung (300),
wobei die Hilfssteuerungseinheit (260) des Weiteren konfiguriert ist, um die Indirektbetriebsausführung zu steuern, wenn ein Freigabeereignis des Nahbereichskommunikationskanals während einer Direktbetriebsausführung unter Verwendung des Nahbereichskommunikationskanals mit der elektronischen Hauptvorrichtung (100) eintritt.

6. Elektronische Hilfsvorrichtung (200) nach Anspruch 5, wobei die Hilfssteuerungseinheit (260) konfiguriert ist, um einen Netzkommunikationskanal mit der elektronischen Hauptvorrichtung (100) aufzubauen, und mindestens einige unbestätigte Kommunikationsdienstdaten zu empfangen, unter Daten, die die elektronische Hauptvorrichtung durch ein Kommunikationsmodul (110) über den Netzkommunikationskanal empfängt, der von der Hilfssteuerungseinheit aufgebaut wird, oder konfiguriert ist, um einen Netzkommunikationskanal mit einer Dienstunterstützungsvorrichtung (300) aufzubauen, und mindestens einige unbestätigte Kommunikationsdienstdaten zu empfangen, die die elektronische Hauptvorrichtung von der Dienstunterstützungsvorrichtung empfängt, oder konfiguriert ist, um einen Netzkommunikationskanal mit einer Dienstunterstützungsvorrichtung aufzubauen und Informationen über den Zugang zu dem zweiten Kommunikationsnetz (500) an die Dienstunterstützungsvorrichtung zu übertragen.

7. Elektronische Hilfsvorrichtung (200) nach Anspruch 5, die des Weiteren eine Hilfsanzeigeeinheit (240) umfasst, konfiguriert, um mindestens eine der Folgenden auszugeben: eine Nachricht über eine Freigabe oder den Aufbau des Nahbereichskommunikationskanals, eine Nachricht über die Indirektbetriebsschaltung oder eine Nachricht, dass das zweite Kommunikationsnetz während der Indirektbetriebsschaltung unzugänglich ist.

8. Elektronische Hilfsvorrichtung (200) nach einem der vorhergehenden Ansprüche 5-7, wobei die Hilfssteuerungseinheit (260) des Weiteren konfiguriert ist, um eine Direktbetriebsausführung zu steuern, basierend auf dem Nahbereichskommunikationskanal mit der elektronischen Hauptvorrichtung, wenn ein Indirektbetriebs-Freigabeereignis eintritt.

9. Elektronische Hilfsvorrichtung (200) nach einem der Ansprüche 5-8, die des Weiteren eine Hilfsanzeigeeinheit (240) umfasst, konfiguriert, um eine Ausgabe an mindestens ein Widget zu liefern, das sich auf Indirektbetriebsausführung oder Freigabeeinstellung bezieht, eine Wählanzeige, wo eine Telefonnummer und Texteingabe verfügbar sind; eine Informationsanzeige, konfiguriert, um ein gespeichertes Telefonbuch oder ein Telefonbuch der elektronischen Hauptvorrichtung anzuzeigen, oder eine Anrufliste mit mindestens einigen Anruflisten, die von der elektronische Hauptvorrichtung geliefert werden, und mindestens einigen gespeicherten Anruflisten.

10. Kommunikationsdienst-Betriebsverfahren mit:
Aufbau, durch eine Hilfsvorrichtung (200), eines Nahbereichskommunikationskanals zur Kommunikation mit einer elektronischen Hauptvorrichtung (100), die mit einem ersten Kommunikationsnetz (400) verbunden ist;
Übertragung und Empfang von Daten, durch die elektronische Hauptvorrichtung (100) und die Hilfsvorrichtung (200), in einer Direktbetriebsausführung durch den Nahbereichskommunikationskanal;
Empfang, durch die elektronische Hilfsvorrichtung (200), eines Indirektbetriebsausführungs-Anforderungsereignisses unter Verwendung von Kommunikationsdienstdaten der elektronischen Hauptvorrichtung (100), die mit dem ersten Kommunikationsnetz (400) verbunden ist;
Bestätigung, durch die elektronische Hilfsvorrichtung (200), ob ein zweites Kommunikationsnetz (500) zugänglich ist;
Freigabe, durch die elektronische Hilfsvorrichtung (200), des Nahbereichskommunikationskanals, der die elektronische Hilfsvorrichtung (200) mit der elektronischen Hauptvorrichtung (100) verbindet;
Übertragung, durch die elektronische Hilfsvorrichtung (200), einer Indirektbetriebsausführungs-Anforderungsnachricht an die elektronische Hauptvorrichtung (100) über das zweite Kommunikationsnetz (500),
wenn ein Eingabesignal, das die Indirektbetriebsfreigabe anfordert, empfangen wird, mit Freigabe, durch die elektronische Hilfsvorrichtung (200), des Zugangszustands des zweiten Kommunikationsnetzes (500), Empfang von Daten, durch die Hilfsvorrichtung (200), von der elektronischen Hauptvorrichtung her in der Indirektbetriebsausführung, entweder
- durch das zweite Kommunikationsnetz (500) unter Verwendung von Verbindungsdaten, die von einer Dienstunterstützungsvorrichtung (300) empfangen werden, die mit dem zweiten Kommunikationsnetz verbunden ist, oder
- durch ein erstes Netzkommunikationsmodul (180) der elektronischen Hauptvorrichtung (100) über die Dienstunterstützungsvorrichtung (300).

11. Verfahren nach Anspruch 10, das des Weiteren den Empfang und die Ausgabe, durch die elektronische Hilfsvorrichtung (200), mindestens einiger unbestätigter Kommunikationsdienstdaten umfasst, unter Daten, die die elektronische Hauptvorrichtung (100) durch das erste Kommunikationsnetz (400) empfängt, wobei der Empfang und die Ausgabe der mindestens einigen unbestätigten Kommunikationsdienstdaten des Weiteren umfasst:
Übertragung, durch die elektronische Hauptvorrichtung, der unbestätigten Kommunikationsdienstdaten zu einer Dienstunterstützungsvorrichtung (300), die mit dem zweiten Kommunikationsnetz (500) verbunden ist; und
Übertragung, durch die Dienstunterstützungsvorrichtung, der unbestätigten Kommunikationsdienstdaten an die elektronische Hilfsvorrichtung über das zweite Kommunikationsnetz.

12. Verfahren nach Anspruch 10 oder 11, das des Weiteren mindestens eines der Folgenden umfasst:
Empfang und Ausgabe über das zweite Kommunikationsnetz (500), durch die elektronische Hilfsvorrichtung (200), einer Kommunikationsdienst-Verbindungsnachricht, wobei die Kommunikationsdienst-Verbindungsnachricht von der elektronischen Hauptvorrichtung (100) über das erste Kommunikationsnetz (400) empfangen wird, und Übertragung einer Bestimmung, ob die elektronische Hilfsvorrichtung eine Kommunikationsdienstverbindung mit der elektronischen Hauptvorrichtung gestattet; oder
Sammeln, durch die elektronische Hauptvorrichtung, von Informationen über den Zugang zu dem zweiten Kommunikationsnetz der elektronischen Hilfsvorrichtung und Aufbau, durch die elektronische Hauptvorrichtung, eines Netzkommunikationskanals basierend auf dem zweiten Kommunikationsnetz mit der elektronischen Hilfsvorrichtung, wobei der Netzkommunikationskanal unter Verwendung der Zugangsinformationen aufgebaut wird.

13. Verfahren nach einem der Ansprüche 10-12, das des Weiteren mindestens eines der Folgenden umfasst:
Übertragung, durch die elektronische Hilfsvorrichtung (200), einer Kommunikationsdienst-Verbindungsanforderungsnachricht an die elektronische Hauptvorrichtung (100) über das zweite Kommunikationsnetz (500);
Versuch, durch die elektronische Hauptvorrichtung, einer Kommunikationsdienst-Verbindung mit einer anderen elektronischen Vorrichtung (101), basierend auf Informationen, die in der Kommunikationsdienst-Verbindungsanforderungsnachricht enthalten sind; und
Übertragend, durch die elektronische Hauptvorrichtung, eines Kommunikationsdienstverbindungs-Ergebnisses an die elektronische Hilfsvorrichtung.

14. Verfahren nach einem der Ansprüche 10-13, das des Weiteren mindestens eines der Folgenden umfasst:
Ausgabe einer Nachricht mit Mitteilung einer Indirektbetriebsschaltung sowie einer Nachricht mit Mitteilung einer Nahbereichskommunikationskanal-Freigabe zwischen der elektronischen Hilfsvorrichtung (200) und der elektronischen Hauptvorrichtung (100) und/oder eine Nachricht mit Mitteilung des Aufbaus eines Nahbereichskommunikationskanals zwischen der elektronischen Hilfsvorrichtung und der elektronischen Hauptvorrichtung;
Ausgabe einer Nachricht mit Mitteilung, dass das zweite Kommunikationsnetz (500) während der Indirektbetriebsschaltung unzugänglich ist;
Ausgabe eines Widgets, das sich auf die Indirektbetriebsausführung oder Freigabeeinstellung bezieht; oder
Ausgabe auf mindestens einem der Folgenden: einer Wählanzeige, wo eine Telefonnummer und Texteingabe verfügbar sind, einer Informationsanzeige, konfiguriert, um ein gespeichertes Telefonbuch oder ein Telefonbuch der elektronischen Hauptvorrichtung anzuzeigen, oder einer Anruflistenanzeige mit mindestens einigen Anruflisten der elektronischen Hauptvorrichtung und mindestens einigen gespeicherten Anruflisten.

## Revendications

1. Dispositif électronique principal (100) comprenant :
un module de communication (100) configuré pour établir un canal de communication en utilisant un premier réseau de communication (400) ;
un premier module de communication de réseau (180) configuré pour établir un canal de communication de réseau en utilisant un deuxième réseau de communication (500) ;
un premier module de communication à courte portée (170) configuré pour établir un canal de communication à courte portée ; et
une unité de commande principale (160) configurée pour commander une exécution en mode direct et une exécution en mode indirect, où dans l'exécution en mode direct, des données reçues par l'intermédiaire du module de communication sont transmises à un dispositif auxiliaire (200) via le canal de communication à courte portée et dans l'exécution en mode indirect les données reçues par l'intermédiaire du module de communication sont transmises au dispositif électronique auxiliaire (200) soit
- par l'intermédiaire du deuxième réseau de communication (500) à l'aide de données de connexion reçues à partir d'un dispositif de prise en charge de service (300) connecté au deuxième réseau de communication, ou
- par l'intermédiaire du premier module de communication de réseau (180) via le dispositif de prise en charge de service (300),
où l'unité de commande principale (160) est configurée pour commander l'exécution en mode indirect lorsqu'un événement de libération du canal de communication à courte portée se produit lors d'une exécution en mode direct à l'aide du canal de communication à courte portée avec le dispositif électronique auxiliaire (200).

2. Dispositif électronique principal (100) selon la revendication 1, où l'unité de commande principale (160) est configurée pour transmettre au dispositif électronique auxiliaire au moins certaines données de service de communication non confirmées, lesdites données comprenant l'une d'une information d'appel manqué ou d'une information de message, parmi des données reçues par l'intermédiaire du module de communication.

3. Dispositif électronique principal (100) selon la revendication 2, où l'unité de commande principale (160) est configurée pour transmettre les au moins certaines données de communication non confirmées à un dispositif de prise en charge de service (300) connecté au premier module de communication de réseau (180) en temps réel ou configurée pour transmettre les au moins certaines données de communication non confirmées au dispositif de prise en charge de service lorsque l'exécution en mode indirect du dispositif électronique auxiliaire est demandée, ou
dans lequel l'unité de commande principale est configurée pour établir le canal de communication de réseau à l'aide du premier module de communication de réseau avec le dispositif électronique auxiliaire (200) et est configurée pour transmettre les données de service de communication non confirmées au dispositif électronique auxiliaire par l'intermédiaire du canal de communication de réseau.

4. Dispositif électronique principal (100) selon l'une quelconque des revendications précédentes,
où l'unité de commande principale (160) est configurée, en outre, pour arrêter l'exécution en mode indirect ainsi que pour commander l'exécution en mode direct en utilisant le canal de communication à courte portée avec le dispositif électronique auxiliaire lorsqu'un événement demandant un établissement du canal de communication à courte portée se produit lors de l'exécution en mode indirect.

5. Dispositif électronique auxiliaire (200) comprenant :
un deuxième module de communication à courte portée (270) configuré pour communiquer avec un dispositif électronique principal (100) dans une exécution en mode direct par l'intermédiaire d'un canal de communication à courte portée, le deuxième module de communication à courte portée (270) étant, en outre, configuré pour établir le canal de communication à courte portée et recevoir des données du dispositif électronique principal (100) lors de l'exécution en mode direct par l'intermédiaire du canal de communication à courte portée ;
une unité de commande auxiliaire (260) configurée pour transmettre un message de demande d'exécution en mode indirect demandant à un dispositif électronique principal (100) par l'intermédiaire d'un deuxième réseau de communication (500), des données de service de communication transmises et / ou reçues par le dispositif électronique principal (100) par l'intermédiaire d'un premier réseau de communication (400) ; et
un deuxième module de communication de réseau (280) configuré pour établir un canal de communication de réseau en utilisant le deuxième réseau de communication (500), le deuxième module de communication de réseau (280) étant, en outre, configuré pour recevoir des données du dispositif électronique principal lors de l'exécution en mode indirect soit
- par l'intermédiaire du deuxième réseau de communication (500) en utilisant des données de connexion reçues à partir d'un dispositif de prise en charge de service (300) connecté au deuxième réseau de communication (500), ou
- par l'intermédiaire d'un premier module de communication de réseau (180) du dispositif électronique principal (100) via le dispositif de prise en charge de service (300),
où l'unité de commande auxiliaire (260) est configurée, en outre, pour commander l'exécution en mode indirect lorsqu'un événement de libération du canal de communication à courte portée se produit lors d'une exécution en mode direct en utilisant le canal de communication à courte portée avec le dispositif électronique principal (100).

6. Dispositif électronique auxiliaire (200) selon la revendication 5, où l'unité de commande auxiliaire (260) est configurée pour établir un canal de communication de réseau avec le dispositif électronique principal (100), et pour recevoir au moins certaines données de service de communication non confirmées parmi des données que le dispositif électronique principal reçoit par l'intermédiaire d'un module de communication (110) via le canal de communication de réseau établi par l'unité de commande auxiliaire, ou est configuré pour établir un canal de communication de réseau avec un dispositif de prise en charge de service (300), et pour recevoir au moins certaines données de service de communication non confirmées que le dispositif électronique principal reçoit en provenance du dispositif de prise en charge de service, ou est configurée pour établir un canal de communication de réseau avec un dispositif de prise en charge de service et pour transmettre des informations sur l'accès au deuxième réseau de communication (500) au dispositif de prise en charge de service.

7. Dispositif électronique auxiliaire (200) selon la revendication 5, comprenant, en outre, une unité d'affichage auxiliaire (240) configurée pour émettre au moins un message parmi un message notifiant une libération ou un établissement du canal de communication à courte portée, un message notifiant une commutation en mode indirect, ou un message notifiant que le deuxième réseau de communication est inaccessible lors de la commutation en mode indirect.

8. Dispositif électronique auxiliaire (200) selon l'une quelconque des revendications précédentes 5-7, où l'unité de commande auxiliaire (260) est configurée, en outre, pour commander une exécution en mode direct sur la base du canal de communication à courte portée avec le dispositif électronique principal lorsqu'un événement de libération en mode indirect se produit.

9. Dispositif électronique auxiliaire (200) selon l'une quelconque des revendications 5-8, comprenant, en outre, une unité d'affichage auxiliaire (240) configurée pour fournir une émission à au moins un parmi un widget relatif à l'exécution en mode indirect ou au réglage de libération, un écran de numérotation où une entrée de numéro de téléphone et texte est disponible ; un écran d'affichage d'informations configuré pour afficher un répertoire téléphonique stocké ou un répertoire téléphonique fourni par le dispositif électronique principal, ou un écran de listes d'appels comprenant au moins certaines listes d'appels fournies par le dispositif électronique principal et au moins certaines listes d'appels stockées.

10. Procédé de fonctionnement d'un service de communication comprenant :
établir, au moyen d'un dispositif auxiliaire (200), un canal de communication à courte portée pour communiquer avec un dispositif électronique principal (100) connecté à un premier réseau de communication (400) ;
transmettre et recevoir des données, à l'aide du dispositif électronique principal (100) et du dispositif auxiliaire (200), lors d'une exécution en mode direct par l'intermédiaire du canal de communication à courte portée ;
recevoir, à l'aide du dispositif électronique auxiliaire (200), un événement de demande d'exécution en mode indirect en utilisant des données de service de communication du dispositif électronique principal (100) connecté au premier réseau de communication (400) ;
confirmer, à l'aide du dispositif électronique auxiliaire (200), si un deuxième réseau de communication (500) est accessible ;
libérer, à l'aide du dispositif électronique auxiliaire (200), le canal de communication à courte portée connectant le dispositif électronique auxiliaire (200) au dispositif électronique principal (100) ;
transmettre, à l'aide du dispositif électronique auxiliaire (200), un message de demande d'exécution en mode indirect au dispositif électronique principal (100) par l'intermédiaire du deuxième réseau de communication (500),
lorsqu'un signal d'entrée demandant une libération en mode indirect est reçu, libérer, à l'aide du dispositif électronique auxiliaire (200), l'état d'accès du deuxième réseau de communication (500), recevoir des données, à l'aide du dispositif auxiliaire (200), à partir du dispositif électronique principal lors de l'exécution en mode indirect soit
- par l'intermédiaire du deuxième réseau de communication (500) en utilisant des données de connexion reçues à partir d'un dispositif de prise en charge de service (300) connecté au deuxième réseau de communication, ou
- par l'intermédiaire d'un premier module de communication de réseau (180) du dispositif électronique principal (100) via le dispositif de prise en charge de service (300).

11. Procédé selon la revendication 10, comprenant, en outre, la réception et l'émission, par le dispositif électronique auxiliaire (200), d'au moins certaines données de service de communication non confirmées parmi des données que le dispositif électronique principal (100) reçoit par l'intermédiaire du premier réseau de communication (400),
où la réception et l'émission d'au moins certaines données de service de communication non confirmées comprennent en outre :
transmettre, à l'aide du dispositif électronique principal, les données de service de communication non confirmées à un dispositif de prise en charge de service (300) connecté au deuxième réseau de communication (500) ; et
transmettre, à l'aide du dispositif de prise en charge de service, les données de service de communication non confirmées au dispositif électronique auxiliaire par l'intermédiaire du deuxième réseau de communication.

12. Procédé selon la revendication 10 ou 11, comprenant, en outre, au moins un parmi :
recevoir et émettre par l'intermédiaire du deuxième réseau de communication (500), à l'aide du dispositif électronique auxiliaire (200), un message de connexion de service de communication, où le message de connexion de service de communication est reçu par le dispositif électronique principal (100) par l'intermédiaire du premier réseau de communication (400) et transmettre une détermination indiquant si le dispositif électronique auxiliaire permet une connexion de service de communication au dispositif électronique principal ; ou
collecter, à l'aide du dispositif électronique principal, des informations relatives à l'accès au deuxième réseau de communication du dispositif électronique auxiliaire et établir, à l'aide du dispositif électronique principal, un canal de communication de réseau sur la base du deuxième réseau de communication avec le dispositif électronique auxiliaire, où le canal de communication de réseau est établi en utilisant l'information d'accès.

13. Procédé selon l'une quelconque des revendications 10-12, comprenant, en outre, au moins un parmi :
transmettre, à l'aide du dispositif électronique auxiliaire (200), un message de demande de connexion de service de communication au dispositif électronique principal (100) par l'intermédiaire du deuxième réseau de communication (500) ;
essayer, à l'aide du dispositif électronique principal, de se connecter au service de communication avec un autre dispositif électronique (101) sur la base d'informations écrites dans le message de demande de connexion de service de communication ; et
transmettre, à l'aide du dispositif électronique principal, un résultat de connexion de service de communication au dispositif électronique auxiliaire.

14. Procédé selon l'une quelconque des revendications 10-13, comprenant, en outre, au moins un parmi :
fournir une émission d'un message fournissant une notification de commutation en mode indirect et au moins l'un d'un message fournissant une notification d'une libération de canal de communication à courte portée entre le dispositif électronique auxiliaire (200) et le dispositif électronique principal (100) ou un message fournissant une notification d'établissement de canal de communication à courte portée entre le dispositif électronique auxiliaire et le dispositif électronique principal ;
fournir une émission d'un message fournissant une notification indiquant que le deuxième réseau de communication (500) est inaccessible lors de la commutation en mode indirect ;
fournir une émission d'un widget concernant le réglage d'exécution ou de libération en mode indirect ; ou
fournir une émission sur au moins un parmi : un écran de numérotation où un numéro de téléphone et une entrée de texte sont disponibles, un écran d'affichage d'informations configuré pour afficher un répertoire stocké ou un répertoire fourni par le dispositif électronique principal, ou un écran de listes d'appels comprenant au moins certaines listes d'appels fournies par le dispositif électronique principal et au moins certaines listes d'appels stockées.
